# EUROPEAN PATENT SPECIFICATION

(11) **EP 3 731 214 B1**
(45) Date of publication and mention of the grant of the patent: **21.05.2025**
(21) Application number: 20168203.6
(22) Date of filing: 11.03.2014
(51) Int. Cl.: G09B 19/24

(54) **SYSTEMS AND METHODS PROVIDING AN ENHANCED USER EXPERIENCE IN A REAL-TIME SIMULATED VIRTUAL REALITY WELDING ENVIRONMENT**
SYSTEME UND VERFAHREN ZUR VERBESSERTEN BENUTZERERFAHRUNG IN EINER ECHTZEIT-SCHWEISSUMGEBUNG MIT EINER SIMULIERTEN VIRTUELLEN REALITÄT
SYSTÈMES ET PROCÉDÉS FOURNISSANT UNE EXPÉRIENCE UTILISATEUR AMÉLIORÉE DANS UN ENVIRONNEMENT DE SOUDAGE DE RÉALITÉ VIRTUELLE SIMULÉE EN TEMPS RÉEL

(30) Priority: 11.03.2013 US 201313792280
(43) Date of publication of application: 28.10.2020
(62) Divisional of application: 14720218.8
(73) Proprietor: Lincoln Global, Inc., Cleveland, OH 44117 (US)
(72) Inventor: PETERS, Carl, Solon, CT Connecticut 44139 (US); POSTLETHWAITE, Deanna, Sparks, NV Nevada 89436 (US); WALLACE, Matthew Wayne, South Windsor, CT Connecticut 06074 (US)
(74) Representative: Hoyng Rokh Monegier B.V.

(56) References cited:
- WO-A1-2016/022452
- JP-A- H07 214 317
- JP-A- H1 133 963
- US-A1- 2011 183 304

## Description

### FIELD OF THE INVENTION

The invention is related to a virtual reality welding system and to a virtual reality welding method. Certain embodiments relate to virtual reality simulation. More particularly, certain embodiments relate to systems and methods for providing arc welding training in a simulated virtual reality environment or augmented reality environment using real-time weld puddle feedback.

### TECHNICAL BACKGROUND

Learning how to arc weld traditionally takes many hours of instruction, training, and practice. There are many different types of arc welding and arc welding processes that can be learned. Typically, welding is learned by a student using a real welding system and performing welding operations on real metal pieces. Such real-world training can tie up scarce welding resources and use up limited welding materials. Recently, however, the idea of training using welding simulations has become more popular. Some welding simulations are implemented via personal computers and/or on-line via the Internet. However, current known welding simulations tend to be limited in their training focus. For example, some welding simulations focus on training only for "muscle memory", which simply trains a welding student how to hold and position a welding tool. Other welding simulations focus on showing visual and audio effects of the welding process, but only in a limited and often unrealistic manner which does not provide the student with the desired feedback that is highly representative of real world welding. It is this actual feedback that directs the student to make necessary adjustments to make a good weld. Welding is learned by watching the arc and/or puddle, not by muscle memory.

Further limitations and disadvantages of conventional, traditional, and proposed approaches will become apparent to one of skill in the art, through comparison of such approaches with embodiments of the present invention as set forth in the remainder of the present application with reference to the drawings.

### [REPLACEMENT PAGE 1A]

Document US 2011/0183304 A1 discloses arc welding simulations that provide simulation of virtual destructive and non-destructive testing and inspection of virtual weldments for training purposes. The virtual testing simulations may be performed on virtual weldments created using a virtual reality welding simulator system. The virtual inspection simulations may be performed using virtual weldments created using a virtual reality welding simulator system. Virtual testing may be performed using a virtual reality welding simulator system and virtual inspection may be performed using a standalone virtual weldment inspection system or using a virtual reality welding simulator system.

### DESCRIPTION OF THE INVENTION

It is an object to overcome the herein mentioned limitations and disadvantages. This problem is solved by a virtual reality welding system according to independent system claim 10 and by a virtual reality welding method according to independent claim 1. Further embodiments of the invention are subject of the subclaims. An arc welding simulation has been devised that provides simulation of a weld puddle in a virtual reality space having real-time molten metal fluidity characteristics and heat absorption and heat dissipation characteristics.

These and other features of the claimed invention, as well as details of illustrated embodiments thereof, will be more fully understood from the following description and drawings.

### BRIEF DESCRIPTION OF THE DRAWINGS

Fig. 1 illustrates an example embodiment of a system block diagram of a system providing arc welding training in a real-time virtual reality environment;
Fig. 2 illustrates an example embodiment of a combined simulated welding console and observer display device (ODD) of the system of Fig. 1;
Fig. 3 illustrates an example embodiment of the observer display device (ODD) of Fig. 2;
Fig. 4 illustrates an example embodiment of a front portion of the simulated welding console of Fig. 2 showing a physical welding user interface (WUI);
Fig. 5 illustrates an example embodiment of a mock welding tool (MWT) of the system of Fig. 1;
Fig. 6 illustrates an example embodiment of a table/stand (T/S) of the system of Fig. 1;
Fig. 7A illustrates an example embodiment of a pipe welding coupon (WC) of the system of Fig. 1;
Fig. 7B illustrates the pipe WC of Fig. 7A mounted in an arm of the table/stand (TS) of Fig. 6;
Fig. 8 illustrates various elements of an example embodiment of the spatial tracker (ST) of Fig. 1;
Fig. 9A illustrates an example embodiment of a face-mounted display device (FMDD) of the system of Fig. 1;
Fig. 9B is an illustration of how the FMDD of Fig. 9A is secured on the head of a user;
Fig. 9C illustrates an example embodiment of the FMDD of Fig. 9A mounted within a welding helmet;
Fig. 10 illustrates an example embodiment of a subsystem block diagram of a programmable processor-based subsystem (PPS) of the system of Fig. 1;
Fig. 11 illustrates an example embodiment of a block diagram of a graphics processing unit (GPU) of the PPS of Fig. 10;
Fig. 12 illustrates an example embodiment of a functional block diagram of the system of Fig. 1;
Fig. 13 is a flow chart of an embodiment of a method of training using the virtual reality training system of Fig. 1;
Figs. 14A-14B illustrate the concept of a welding pixel (wexel) displacement map, in accordance with an embodiment of the present invention;
Fig. 15 illustrates an example embodiment of a coupon space and a weld space of a flat welding coupon (WC) simulated in the system of Fig. 1;
Fig. 16 illustrates an example embodiment of a coupon space and a weld space of a corner (tee joint) welding coupon (WC) simulated in the system of Fig. 1;
Fig. 17 illustrates an example embodiment of a coupon space and a weld space of a pipe welding coupon (WC) simulated in the system of Fig. 1;
Fig. 18 illustrates an example embodiment of the pipe welding coupon (WC) of Fig. 17;
Figs. 19A-19C illustrate an example embodiment of the concept of a dual-displacement puddle model of the system of Fig. 1;
Fig. 20 illustrates a second example embodiment of a system block diagram of a system providing arc welding training in a real-time virtual reality environment;
Fig. 21 illustrates a displayed image of a virtual weld joint having a weld bead appearance that may be displayed on a display device of a virtual reality welding system;
Fig. 22 illustrates the displayed image of the virtual weld joint of Fig. 21 having a weld bead appearance, that may be displayed on a display device of a virtual reality welding system;
Fig. 23 illustrates a virtual reality welding system in operative communication with a 3D printing system;
Fig. 24 illustrates a system block diagram of an example embodiment of a virtual reality welding system; and
Fig. 25 illustrates an example embodiment showing the virtual reality welding system of Fig. 24 in operative communication with a server computer via an external communication infrastructure.

### DETAILED DESCRIPTION

An embodiment of the present invention comprises a virtual reality arc welding (VRAW) system comprising a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. The system is capable of simulating, in a virtual reality space, a weld puddle having real-time molten metal fluidity and heat dissipation characteristics. The system is also capable of displaying the simulated weld puddle on the display device in real-time. The real-time molten metal fluidity and heat dissipation characteristics of the simulated weld puddle provide real-time visual feedback to a user of the mock welding tool when displayed, allowing the user to adjust or maintain a welding technique in real-time in response to the real-time visual feedback (i.e., helps the user learn to weld correctly). The displayed weld puddle is representative of a weld puddle that would be formed in the real-world based on the user's welding technique and the selected welding process and parameters. By viewing a puddle (e.g., shape, color, slag, size, stacked dimes), a user can modify his technique to make a good weld and determine the type of welding being done. The shape of the puddle is responsive to the movement of the gun or stick. As used herein, the term "real-time" means perceiving and experiencing in time in a simulated environment in the same way that a user would perceive and experience in a real-world welding scenario. Furthermore, the weld puddle is responsive to the effects of the physical environment including gravity, allowing a user to realistically practice welding in various positions including overhead welding and various pipe welding angles (e.g., 1G, 2G, 5G, 6G).

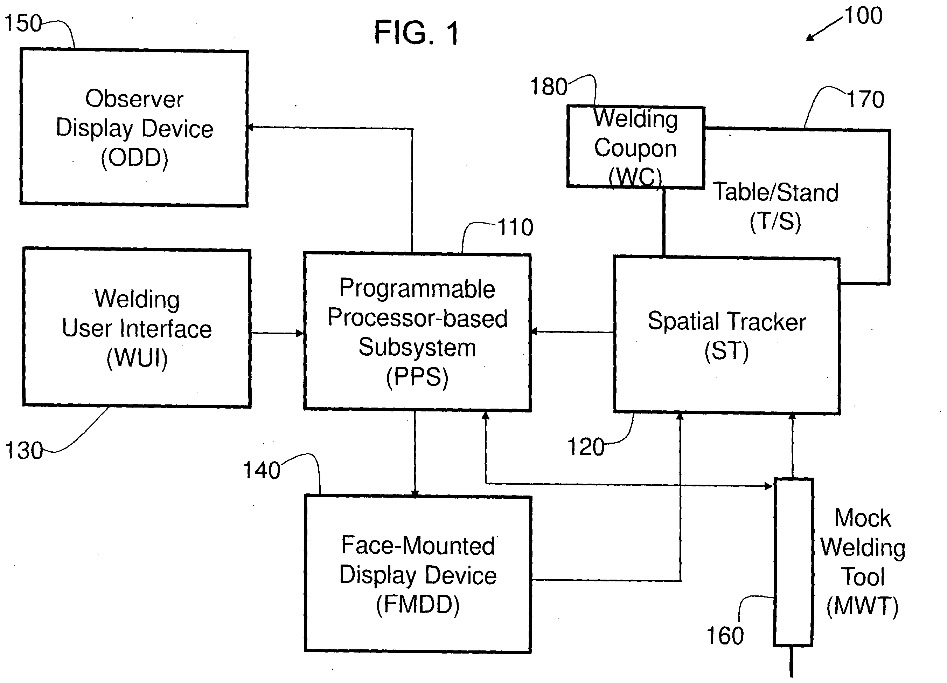

Fig. 1 illustrates an example embodiment of a system block diagram of a system **100** providing arc welding training in a real-time virtual reality environment. The system **100** includes a programmable processor-based subsystem (PPS) 110. The system **100** further includes a spatial tracker (ST) **120** operatively connected to the PPS 110. The system **100** also includes a physical welding user interface (WUI) **130** operatively connected to the PPS **110** and a face-mounted display device (FMDD) **140** operatively connected to the PPS **110** and the ST **120.** The system **100** further includes an observer display device (ODD) **150** operatively connected to the PPS **110.** The system **100** also includes at least one mock welding tool (MWT) **160** operatively connected to the ST **120** and the PPS **110.** The system **100** further includes a table/stand (T/S) **170** and at least one welding coupon (WC) **180** capable of being attached to the T/S **170.** In accordance with an alternative embodiment of the present invention, a mock gas bottle is provided (not shown) simulating a source of shielding gas and having an adjustable flow regulator.

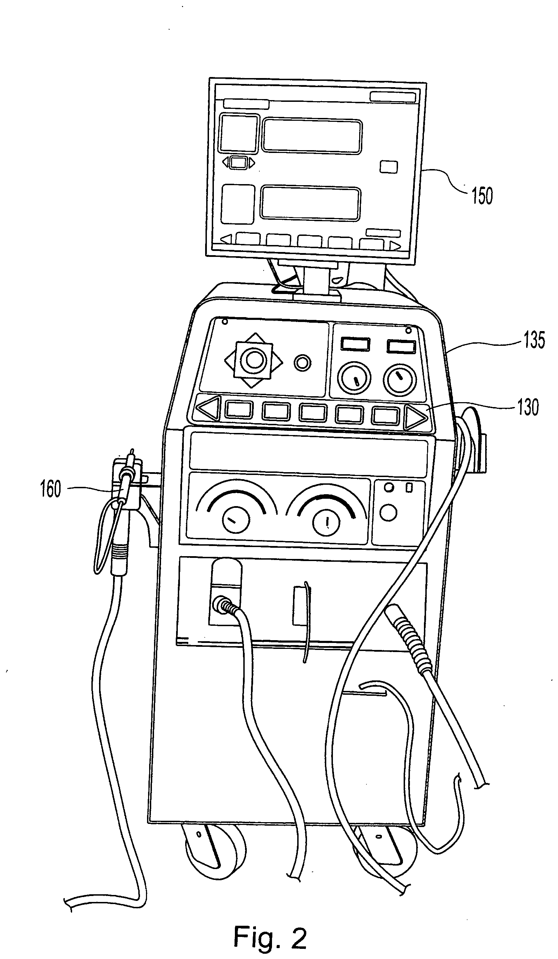

Fig. 2 illustrates an example embodiment of a combined simulated welding console **135** (simulating a welding power source user interface) and observer display device (ODD) **150** of the system **100** of Fig. 1. The physical WUI **130** resides on a front portion of the console **135** and provides knobs, buttons, and a joystick for user selection of various modes and functions. The ODD **150** is attached to a top portion of the console **135.** The MWT **160** rests in a holder attached to a side portion of the console **135.** Internally, the console **135** holds the PPS **110** and a portion of the ST **120.**

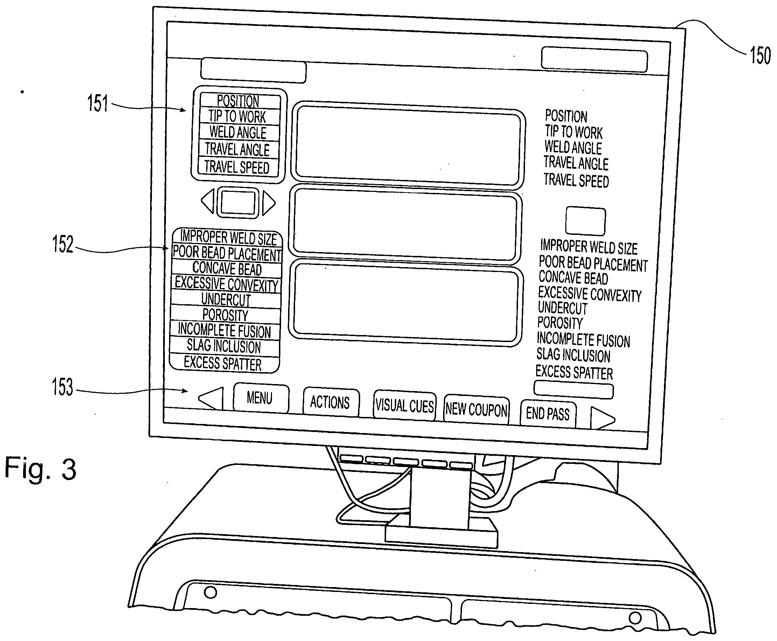

Fig. 3 illustrates an example embodiment of the observer display device (ODD) **150** of Fig. 2. In accordance with an embodiment of the present invention, the ODD **150** is a liquid crystal display (LCD) device. Other display devices are possible as well. For example, the ODD **150** may be a touchscreen display, in accordance with another embodiment of the present invention. The ODD **150** receives video (e.g., SVGA format) and display information from the PPS **110.**

As shown in Fig. 3, the ODD **150** is capable of displaying a first user scene showing various welding parameters **151** including position, tip to work, weld angle, travel angle, and travel speed. These parameters may be selected and displayed in real time in graphical form and are used to teach proper welding technique. Furthermore, as shown in Fig. 3, the ODD **150** is capable of displaying simulated welding discontinuity states **152** including, for example, improper weld size, poor bead placement, concave bead, excessive convexity, undercut, porosity, incomplete fusion, slag inclusion, excess spatter, overfill, and burnthrough (melt through). Undercut is a groove melted into the base metal adjacent to the weld or weld root and left unfilled by weld metal. Undercut is often due to an incorrect angle of welding. Porosity is cavity type discontinuities formed by gas entrapment during solidification often caused by moving the arc too far away from the coupon.

Also, as shown in Fig. 3, the ODD **50** is capable of displaying user selections **153** including menu, actions, visual cues, new coupon, and end pass. These user selections are tied to user buttons on the console **135.** As a user makes various selections via, for example, a touchscreen of the ODD **150** or via the physical WUI **130,** the displayed characteristics can change to provide selected information and other options to the user. Furthermore, the ODD **150** may display a view seen by a welder wearing the FMDD **140** at the same angular view of the welder or at various different angles, for example, chosen by an instructor. The ODD **150** may be viewed by an instructor and/or students for various training purposes. For example, the view may be rotated around the finished weld allowing visual inspection by an instructor. In accordance with an alternate embodiment of the present invention, video from the system **100** may be sent to a remote location via, for example, the Internet for remote viewing and/or critiquing. Furthermore, audio may be provided, allowing real-time audio communication between a student and a remote instructor.

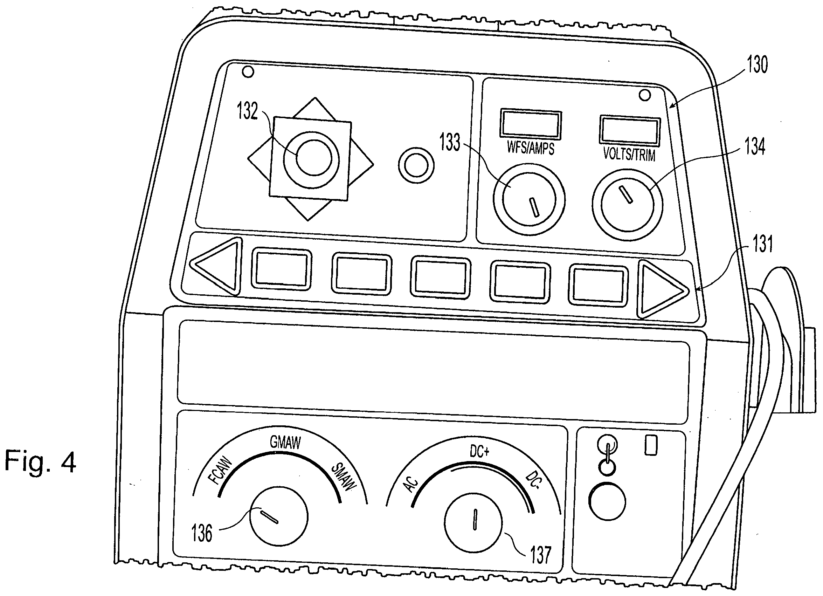

Fig. 4 illustrates an example embodiment of a front portion of the simulated welding console **135** of Fig. 2 showing a physical welding user interface (WUI) **130.** The WUI **130** includes a set of buttons **131** corresponding to the user selections **153** displayed on the ODD **150.** The buttons **131** are colored to correspond to the colors of the user selections **153** displayed on the ODD **150.** When one of the buttons **131** is pressed, a signal is sent to the PPS **110** to activate the corresponding function. The WUI **130** also includes a joystick **132** capable of being used by a user to select various parameters and selections displayed on the ODD **150.** The **WUI 130** further includes a dial or knob **133** for adjusting wire feed speed/amps, and another dial or knob **134** for adjusting volts/trim. The WUI **130** also includes a dial or knob **136** for selecting an arc welding process. In accordance with an embodiment of the present invention, three arc welding processes are selectable including flux cored arc welding (FCAW) including gas-shielded and self-shielded processes; gas metal arc welding (GMAW) including short arc, axial spray, STT, and pulse; gas tungsten arc welding (GTAW); and shielded metal arc welding (SMAW) including E6010 and E7010 electrodes. The **WUI 130** further includes a dial or knob **137** for selecting a welding polarity. In accordance with an embodiment of the present invention, three arc welding polarities are selectable including alternating current (AC), positive direct current (DC+), and negative direct current (DC-).

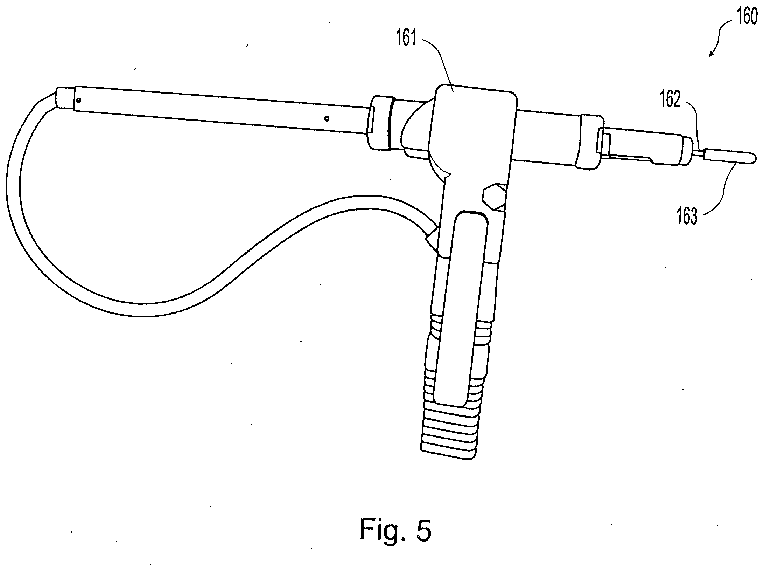

Fig. 5 illustrates an example embodiment of a mock welding tool (MWT) **160** of the system **100** of Fig. 1. The MWT **160** of Fig. 5 simulates a stick welding tool for plate and pipe welding and includes a holder **161** and a simulated stick electrode **162.** A trigger on the MWD **160** is used to communicate a signal to the PPS **110** to activate a selected simulated welding process. The simulated stick electrode **162** includes a tactilely resistive tip **163** to simulate resistive feedback that occurs during, for example, a root pass welding procedure in real-world pipe welding or when welding a plate. If the user moves the simulated stick electrode **162** too far back out of the root, the user will be able to feel or sense the lower resistance, thereby deriving feedback for use in adjusting or maintaining the current welding process.

It is contemplated that the stick welding tool may incorporate an actuator, not shown, that withdraws the simulated stick electrode **162** during the virtual welding process. That is to say that as a user engages in virtual welding activity, the distance between holder **161** and the tip of the simulated stick electrode **162** is reduced to simulate consumption of the electrode. The consumption rate, i.e. withdrawal of the stick electrode **162,** may be controlled by the PPS **110** and more specifically by coded instructions executed by the PPS **110.** The simulated consumption rate may also depend on the user's technique. It is noteworthy to mention here that as the system **100** facilitates virtual welding with different types of electrodes, the consumption rate or reduction of the stick electrode **162** may change with the welding procedure used and/or setup of the system **100.**

Other mock welding tools are possible as well, in accordance with other embodiments of the present invention, including a MWD that simulates a hand-held semiautomatic welding gun having a wire electrode fed through the gun, for example. Furthermore, in accordance with other certain embodiments of the present invention, a real welding tool could be used as the MWT **160** to better simulate the actual feel of the tool in the user's hands, even though, in the system **100,** the tool would not be used to actually create a real arc. Also, a simulated grinding tool may be provided, for use in a simulated grinding mode of the simulator **100.** Similarly, a simulated cutting tool may be provided, for use in a simulated cutting mode of the simulator **100.** Furthermore, a simulated gas tungsten arc welding (GTAW) torch or filler material may be provided for use in the simulator **100.**

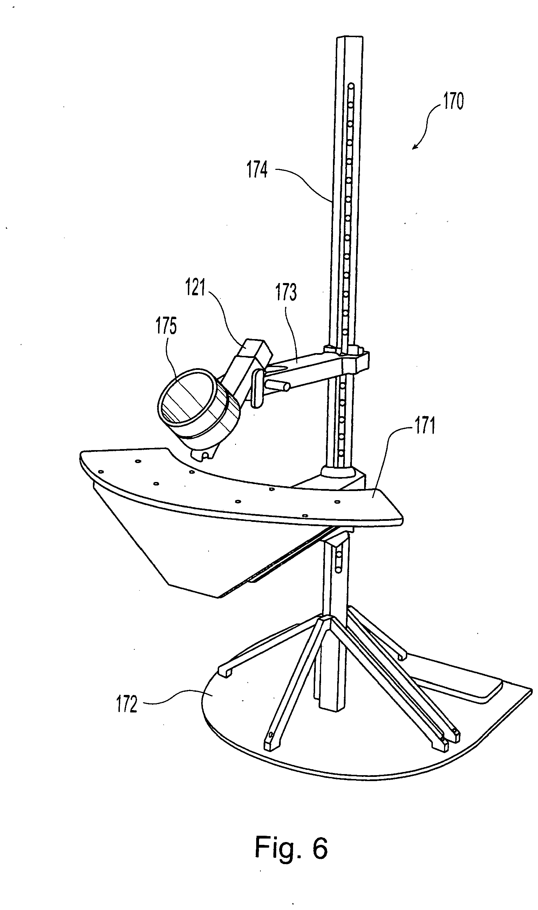

Fig. 6 illustrates an example embodiment of a table/stand (T/S) **170** of the system 100 of Fig. 1. The T/S **170** includes an adjustable table **171,** a stand or base **172,** an adjustable arm **173,** and a vertical post **174.** The table **171,** the stand **172,** and the arm **173** are each attached to the vertical post **174.** The table **171** and the arm **173** are each capable of being manually adjusted upward, downward, and rotationally with respect to the vertical post **174.** The arm **173** is used to hold various welding coupons (e.g., welding coupon **175)** and a user may rest his/her arm on the table **171** when training. The vertical post **174** is indexed with position information such that a user may know exactly where the arm **173** and the table **171** are vertically positioned on the post **171.** This vertical position information may be entered into the system by a user using the **WUI 130** and the ODD **150.**

In accordance with an alternative embodiment of the present invention, the positions of the table **171** and the arm **173** may be automatically set by the PSS **110** via preprogrammed settings, or via the **WUI 130** and/or the ODD **150** as commanded by a user. In such an alternative embodiment, the T/S **170** includes, for example, motors and/or servo-mechanisms, and signal commands from the PPS **110** activate the motors and/or servo-mechanisms. In accordance with a further alternative embodiment of the present invention, the positions of the table **171** and the arm **173** and the type of coupon are detected by the system **100.** In this way, a user does not have to manually input the position information via the user interface. In such an alternative embodiment, the T/S **170** includes position and orientation detectors and sends signal commands to the PPS **110** to provide position and orientation information, and the WC **175** includes position detecting sensors (e.g., coiled sensors for detecting magnetic fields). A user is able to see a rendering of the T/S **170** adjust on the ODD **150** as the adjustment parameters are changed, in accordance with an embodiment of the present invention.

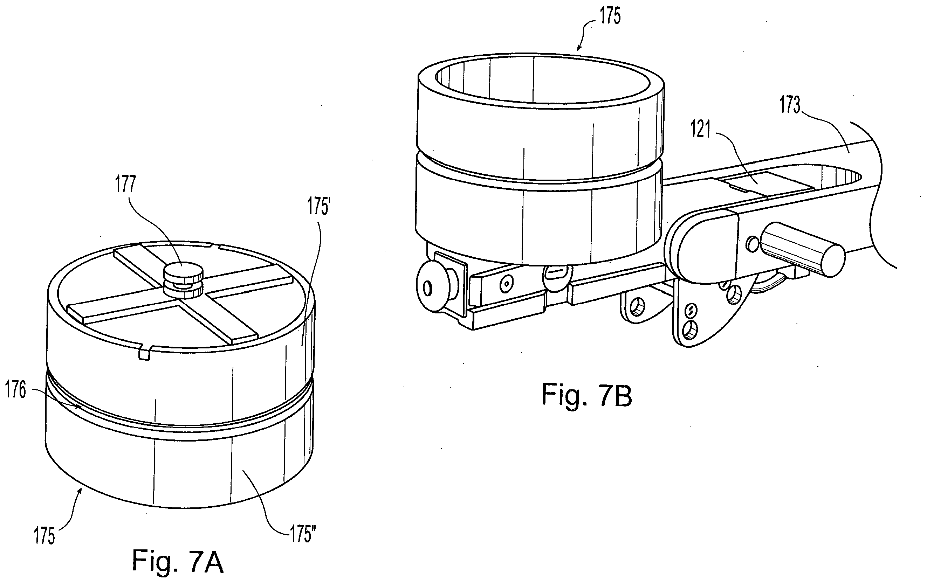

Fig. 7A illustrates an example embodiment of a pipe welding coupon (WC) **175** of the system **100** of Fig. 1. The WC **175** simulates two six inch diameter pipes **175'** and **175"** placed together to form a root **176** to be welded. The WC **175** includes a connection portion **177** at one end of the WC **175,** allowing the WC **175** to be attached in a precise and repeatable manner to the arm **173.** Fig. 7B illustrates the pipe WC **175** of Fig. 7A mounted on the arm **173** of the table/stand (TS) **170** of Fig. 6. The precise and repeatable manner in which the WC **175** is capable of being attached to the arm **173** allows for spatial calibration of the WC **175** to be performed only once at the factory. Then, in the field, as long as the system **100** is told the position of the arm **173,** the system **100** is able to track the MWT **160** and the FMDD **140** with respect to the WC **175** in a virtual environment. A first portion of the arm **173,** to which the WC **175** is attached, is capable of being tilted with respect to a second portion of the arm **173,** as shown in Fig. 6. This allows the user to practice pipe welding with the pipe in any of several different orientations and angles.

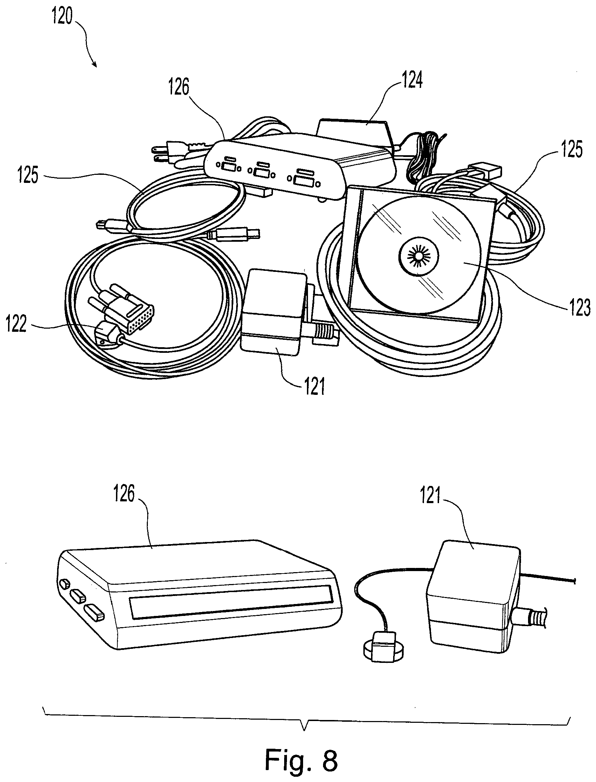

Fig. 8 illustrates various elements of an example embodiment of the spatial tracker (ST) **120** of Fig. 1. The ST **120** is a magnetic tracker that is capable of operatively interfacing with the PPS **110** of the system **100.** The ST **120** includes a magnetic source **121** and source cable, at least one sensor **122** and associated cable, host software on disk **123,** a power source **124** and associated cable, USB and RS-232 cables **125,** and a processor tracking unit **126.** The magnetic source **121** is capable of being operatively connected to the processor tracking unit **126** via a cable. The sensor **122** is capable of being operatively connected to the processor tracking unit **126** via a cable. The power source **124** is capable of being operatively connected to the processor tracking unit **126** via a cable. The processor tracking unit **126** is cable of being operatively connected to the PPS **110** via a USB or RS-232 cable **125.** The host software on disk **123** is capable of being loaded onto the PPS **110** and allows functional communication between the ST **120** and the PPS **110.**

Referring to Fig. 6, the magnetic source **121** of the ST **120** is mounted on the first portion of the arm **173.** The magnetic source **121** creates a magnetic field around the source **121,** including the space encompassing the WC **175** attached to the arm **173,** which establishes a 3D spatial frame of reference. The T/S **170** is largely non-metallic (non-ferric and non-conductive) so as not to distort the magnetic field created by the magnetic source **121.** The sensor **122** includes three induction coils orthogonally aligned along three spatial directions. The induction coils of the sensor **122** each measure the strength of the magnetic field in each of the three directions and provide that information to the processor tracking unit **126.** As a result, the system **100** is able to know where any portion of the WC **175** is with respect to the 3D spatial frame of reference established by the magnetic field when the WC **175** is mounted on the arm **173.** The sensor **122** may be attached to the MWT **160** or to the FMDD **140,** allowing the MWT **160** or the FMDD **140** to be tracked by the ST **120** with respect to the 3D spatial frame of reference in both space and orientation. When two sensors **122** are provided and operatively connected to the processor tracking unit **126,** both the MWT **160** and the FMDD **140** may be tracked. In this manner, the system **100** is capable of creating a virtual WC, a virtual MWT, and a virtual T/S in virtual reality space and displaying the virtual WC, the virtual MWT, and the virtual T/S on the FMDD **140** and/or the ODD **150** as the MWT **160** and the FMDD **140** are tracked with respect to the 3D spatial frame of reference.

In accordance with an alternative embodiment of the present invention, the sensor(s) **122** may wirelessly interface to the processor tracking unit **126,** and the processor tracking unit **126** may wirelessly interface to the PPS **110.** In accordance with other alternative embodiments of the present invention, other types of spatial trackers **120** may be used in the system **100** including, for example, an accelerometer/gyroscope-based tracker, an optical tracker (active or passive), an infrared tracker, an acoustic tracker, a laser tracker, a radio frequency tracker, an inertial tracker, and augmented reality based tracking systems. Other types of trackers may be possible as well.

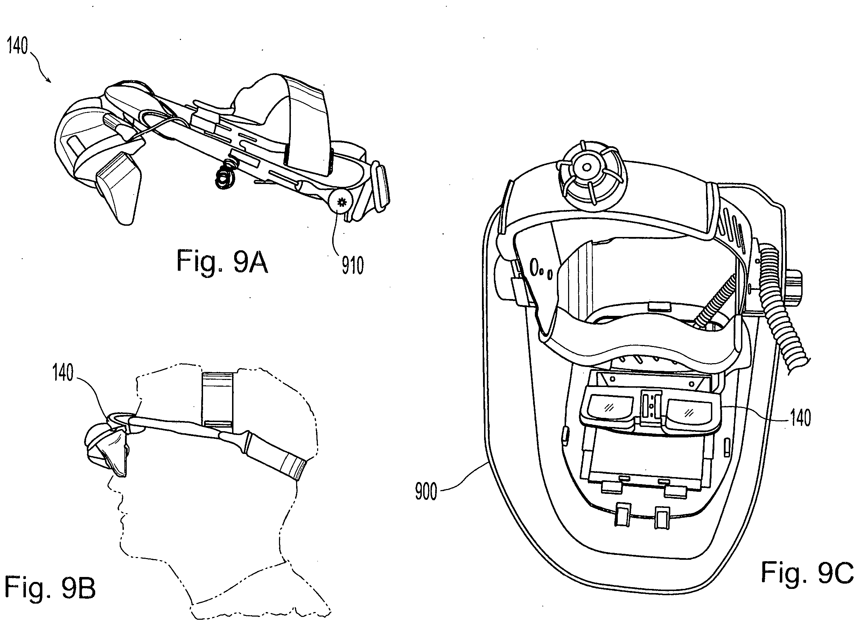

Fig. 9A illustrates an example embodiment of the face-mounted display device **140** (FMDD) of the system **100** of Fig. 1. Fig. 9B is an illustration of how the FMDD **140** of Fig. 9A is secured on the head of a user. Fig. 9C illustrates an example embodiment of the FMDD **140** of Fig. 9A integrated into a welding helmet **900.** The FMDD **140** operatively connects to the PPS **110** and the ST **120** either via wired means or wirelessly. A sensor **122** of the ST **120** may be attached to the FMDD **140** or to the welding helmet 900, in accordance with various embodiments of the present invention, allowing the FMDD **140** and/or welding helmet **900** to be tracked with respect to the 3D spatial frame of reference created by the ST **120.**

In accordance with an embodiment of the present invention, the FMDD **140** includes two high-contrast SVGA 3D OLED microdisplays capable of delivering fluid full-motion video in the 2D and frame sequential video modes. Video of the virtual reality environment is provided and displayed on the FMDD **140.** A zoom (e.g., 2X) mode may be provided, allowing a user to simulate a cheater lens, for example.

The FMDD **140** further includes two earbud speakers **910,** allowing the user to hear simulated welding-related and environmental sounds produced by the system **100.** The FMDD **140** may operatively interface to the PPS **110** via wired or wireless means, in accordance with various embodiments of the present invention. In accordance with an embodiment of the present invention, the PPS **110** provides stereoscopic video to the FMDD **140,** providing enhanced depth perception to the user. In accordance with an alternate embodiment of the present invention, a user is able to use a control on the MWT **160** (e.g., a button or switch) to call up and select menus and display options on the FMDD **140.** This may allow the user to easily reset a weld if he makes a mistake, change certain parameters, or back up a little to re-do a portion of a weld bead trajectory, for example.

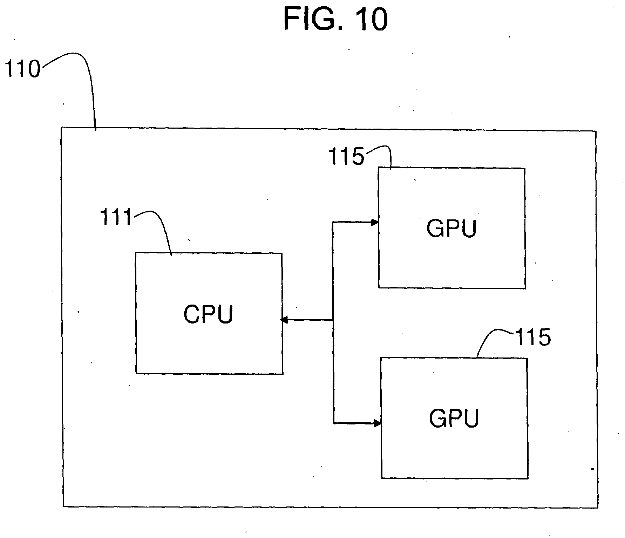

Fig. 10 illustrates an example embodiment of a subsystem block diagram of the programmable processor-based subsystem (PPS) **110** of the system **100** of Fig. 1. The PPS **110** includes a central processing unit (CPU) **111** and two graphics processing units (GPU) **115,** in accordance with an embodiment of the present invention. The two GPUs **115** are programmed to provide virtual reality simulation of a weld puddle (a.k.a. a weld pool) having real-time molten metal fluidity and heat absorption and dissipation characteristics, in accordance with an embodiment of the present invention.

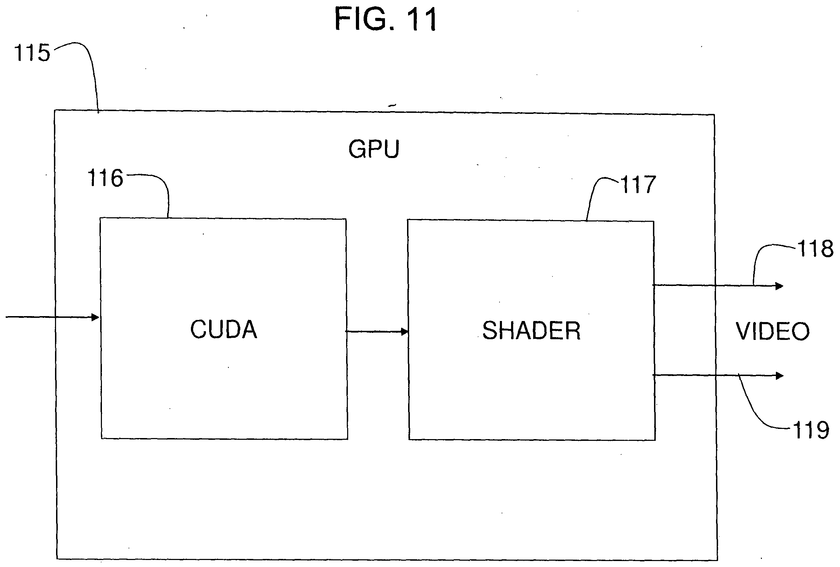

Fig. 11 illustrates an example embodiment of a block diagram of a graphics processing unit (GPU) **115** of the PPS **110** of Fig. 10. Each GPU **115** supports the implementation of data parallel algorithms. In accordance with an embodiment of the present invention, each GPU **115** provides two video outputs **118** and **119** capable of providing two virtual reality views. Two of the video outputs may be routed to the FMDD **140,** rendering the welder's point of view, and a third video output may be routed to the ODD **150,** for example, rendering either the welder's point of view or some other point of view. The remaining fourth video output may be routed to a projector, for example. Both GPUs **115** perform the same welding physics computations but may render the virtual reality environment from the same or different points of view. The GPU **115** includes a compute unified device architecture (CUDA) **116** and a shader **117.** The CUDA **116** is the computing engine of the GPU **115** which is accessible to software developers through industry standard programming languages. The CUDA **116** includes parallel cores and is used to run the physics model of the weld puddle simulation described herein. The CPU **111** provides real-time welding input data to the CUDA **116** on the GPU **115.** The shader **117** is responsible for drawing and applying all of the visuals of the simulation. Bead and puddle visuals are driven by the state of a wexel displacement map which is described later herein. In accordance with an embodiment of the present invention, the physics model runs and updates at a rate of about 30 times per second.

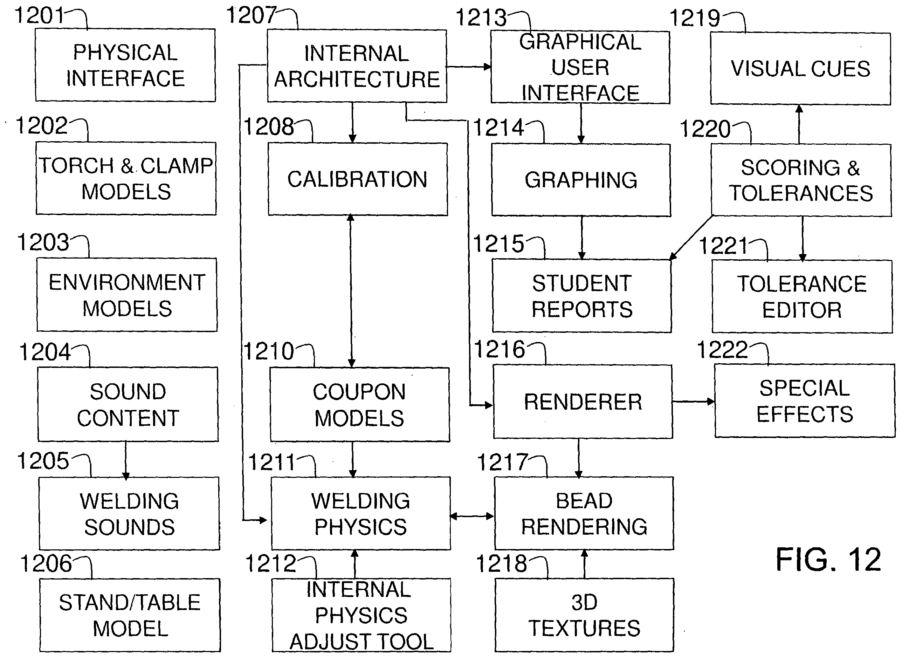

Fig. 12 illustrates an example embodiment of a functional block diagram of the system **100** of Fig. 1. The various functional blocks of the system **100** as shown in Fig. 12 are implemented largely via software instructions and modules running on the PPS **110.** The various functional blocks of the system **100** include a physical interface **1201,** torch and clamp models **1202,** environment models **1203,** sound content functionality **1204,** welding sounds **1205,** stand/table model **1206,** internal architecture functionality **1207,** calibration functionality **1208,** coupon models **1210,** welding physics **1211,** internal physics adjustment tool (tweaker) **1212,** graphical user interface functionality **1213,** graphing functionality **1214,** student reports functionality **1215,** renderer **1216,** bead rendering **1217,** 3D textures **1218,** visual cues functionality **1219,** scoring and tolerance functionality **1220,** tolerance editor **1221,** and special effects **1222.**

The internal architecture functionality **1207** provides the higher level software logistics of the processes of the system **100** including, for example, loading files, holding information, managing threads, turning the physics model on, and triggering menus. The internal architecture functionality **1207** runs on the CPU **111,** in accordance with an embodiment of the present invention. Certain real-time inputs to the PPS **110** include arc location, gun position, FMDD or helmet position, gun on/off state, and contact made state (yes/no).

The graphical user interface functionality **1213** allows a user, through the ODD **150** using the joystick **132** of the physical user interface **130,** to set up a welding scenario. In accordance with an embodiment of the present invention, the set up of a welding scenario includes selecting a language, entering a user name, selecting a practice plate (i.e., a welding coupon), selecting a welding process (e.g., FCAW, GMAW, SMAW) and associated axial spray, pulse, or short arc methods, selecting a gas type and flow rate, selecting a type of stick electrode (e.g., 6010 or 7018), and selecting a type of flux cored wire (e.g., self-shielded, gas-shielded) . The set up of a welding scenario also includes selecting a table height, an arm height, an arm position, and an arm rotation of the T/S **170.** The set up of a welding scenario further includes selecting an environment (e.g., a background environment in virtual reality space), setting a wire feed speed, setting a voltage level, setting an amperage, selecting a polarity, and turning particular visual cues on or off.

During a simulated welding scenario, the graphing functionality **1214** gathers user performance parameters and provides the user performance parameters to the graphical user interface functionality **1213** for display in a graphical format (e.g., on the ODD **150).** Tracking information from the ST **120** feeds into the graphing functionality **1214.** The graphing functionality **1214** includes a simple analysis module (SAM) and a whip/weave analysis module (WWAM). The SAM analyzes user welding parameters including welding travel angle, travel speed, weld angle, position, and tip to work distance by comparing the welding parameters to data stored in bead tables. The WWAM analyzes user whipping parameters including dime spacing, whip time, and puddle time. The WWAM also analyzes user weaving parameters including width of weave, weave spacing, and weave timing. The SAM and WWAM interpret raw input data (e.g., position and orientation data) into functionally usable data for graphing. For each parameter analyzed by the SAM and the WWAM, a tolerance window is defined by parameter limits around an optimum or ideal set point input into bead tables using the tolerance editor **1221,** and scoring and tolerance functionality **1220** is performed.

The tolerance editor **1221** includes a weldometer which approximates material usage, electrical usage, and welding time. Furthermore, when certain parameters are out of tolerance, welding discontinuities (i.e., welding defects) may occur. The state of any welding discontinuities are processed by the graphing functionality **1214** and presented via the graphical user interface functionality **1213** in a graphical format. Such welding discontinuities include improper weld size, poor bead placement, concave bead, excessive convexity, undercut, porosity, incomplete fusion, slag entrapment, overfill, burnthrough, and excessive spatter. In accordance with an embodiment of the present invention, the level or amount of a discontinuity is dependent on how far away a particular user parameter is from the optimum or ideal set point.

Different parameter limits may be pre-defined for different types of users such as, for example, welding novices, welding experts, and persons at a trade show. The scoring and tolerance functionality **1220** provide number scores depending on how close to optimum (ideal) a user is for a particular parameter and depending on the level of discontinuities or defects present in the weld. The optimum values are derived from real-world data. Information from the scoring and tolerance functionality **1220** and from the graphics functionality **1214** may be used by the student reports functionality **1215** to create a performance report for an instructor and/or a student.

The system **100** is capable of analyzing and displaying the results of virtual welding activity. By analyzing the results, it is meant that system **100** is capable of determining when during the welding pass and where along the weld joints, the user deviated from the acceptable limits of the welding process. A score may be attributed to the user's performance. In one embodiment, the score may be a function of deviation in position, orientation and speed of the mock welding tool **160** through ranges of tolerances, which may extend from an ideal welding pass to marginal or unacceptable welding activity. Any gradient of ranges may be incorporated into the system **100** as chosen for scoring the user's performance. Scoring may be displayed numerically or alpha-numerically. Additionally, the user's performance may be displayed graphically showing, in time and/or position along the weld joint, how closely the mock welding tool traversed the weld joint. Parameters such as travel angle, work angle, speed, and distance from the weld joint are examples of what may be measured, although any parameters may be analyzed for scoring purposes. The tolerance ranges of the parameters are taken from real-world welding data, thereby providing accurate feedback as to how the user will perform in the real world. In another embodiment, analysis of the defects corresponding to the user's performance may also be incorporated and displayed on the ODD **150.** In this embodiment, a graph may be depicted indicating what type of discontinuity resulted from measuring the various parameters monitored during the virtual welding activity. While occlusions may not be visible on the ODD **150,** defects may still have occurred as a result of the user's performance, the results of which may still be correspondingly displayed, i.e. graphed.

Visual cues functionality **1219** provide immediate feedback to the user by displaying overlaid colors and indicators on the FMDD **140** and/or the ODD **150.** Visual cues are provided for each of the welding parameters **151** including position, tip to work distance, weld angle, travel angle, travel speed, and arc length (e.g., for stick welding) and visually indicate to the user if some aspect of the user's welding technique should be adjusted based on the predefined limits or tolerances. Visual cues may also be provided for whip/weave technique and weld bead "dime" spacing, for example. Visual cues may be set independently or in any desired combination.

Calibration functionality **1208** provides the capability to match up physical components in real world space (3D frame of reference) with visual components in virtual reality space. Each different type of welding coupon (WC) is calibrated in the factory by mounting the WC to the arm **173** of the T/S **170** and touching the WC at predefined points (indicated by, for example, three dimples on the WC) with a calibration stylus operatively connected to the ST **120.** The ST **120** reads the magnetic field intensities at the predefined points, provides position information to the PPS **110,** and the PPS **110** uses the position information to perform the calibration (i.e., the translation from real world space to virtual reality space).

Any particular type of WC fits into the arm **173** of the T/S **170** in the same repeatable way to within very tight tolerances. Therefore, once a particular WC type is calibrated, that WC type does not have to be re-calibrated (i.e., calibration of a particular type of WC is a one-time event). WCs of the same type are interchangeable. Calibration ensures that physical feedback perceived by the user during a welding process matches up with what is displayed to the user in virtual reality space, making the simulation seem more real. For example, if the user slides the tip of a MWT **160** around the corner of a actual WC **180,** the user will see the tip sliding around the corner of the virtual WC on the FMDD **140** as the user feels the tip sliding around the actual corner. In accordance with an embodiment of the present invention, the MWT **160** is placed in a pre-positioned jig and is calibrated as well, based on the known jig position.

In accordance with an alternative embodiment of the present invention, "smart" coupons are provided, having sensors on, for example, the corners of the coupons. The ST **120** is able to track the corners of a "smart" coupon such that the system **100** continuously knows where the "smart" coupon is in real world 3D space. In accordance with a further alternative embodiment of the present invention, licensing keys are provided to "unlock" welding coupons. When a particular WC is purchased, a licensing key is provided allowing the user to enter the licensing key into the system **100,** unlocking the software associated with that WC. In accordance with another embodiment of the present invention, special non-standard welding coupons may be provided based on real-world CAD drawings of parts. Users may be able to train on welding a CAD part even before the part is actually produced in the real world.

Sound content functionality **1204** and welding sounds **1205** provide particular types of welding sounds that change depending on if certain welding parameters are within tolerance or out of tolerance. Sounds are tailored to the various welding processes and parameters. For example, in a MIG spray arc welding process, a crackling sound is provided when the user does not have the MWT **160** positioned correctly, and a hissing sound is provided when the MWT **160** is positioned correctly. In a short arc welding process, a steady crackling or frying sound is provided for proper welding technique, and a hissing sound may be provided when undercutting is occurring. These sounds mimic real world sounds corresponding to correct and incorrect welding technique.

High fidelity sound content may be taken from real world recordings of actual welding using a variety of electronic and mechanical means, in accordance with various embodiments of the present invention. In accordance with an embodiment of the present invention, the perceived volume and directionality of sound is modified depending on the position, orientation, and distance of the user's head (assuming the user is wearing a FMDD **140** that is tracked by the ST **120)** with respect to the simulated arc between the MWT **160** and the WC **180.** Sound may be provided to the user via ear bud speakers **910** in the FMDD **140** or via speakers configured in the console **135** or T/S **170,** for example.

Environment models **1203** are provided to provide various background scenes (still and moving) in virtual reality space. Such background environments may include, for example, an indoor welding shop, an outdoor race track, a garage, etc. and may include moving cars, people, birds, clouds, and various environmental sounds. The background environment may be interactive, in accordance with an embodiment of the present invention. For example, a user may have to survey a background area, before starting welding, to ensure that the environment is appropriate (e.g., safe) for welding. Torch and clamp models **1202** are provided which model various MWTs **160** including, for example, guns, holders with stick electrodes, etc. in viruatl reality space.

Coupon models **1210** are provided which model various WCs **180** including, for example, flat plate coupons, T-joint coupons, butt-joint coupons, groove-weld coupons, and pipe coupons (e.g., 2-inch diameter pipe and 6-inch diameter pipe) in virtual reality space. A stand/table model **1206** is provided which models the various parts of the T/S **170** including an adjustable table **171,** a stand **172,** an adjustable arm **173,** and a vertical post **174** in virtual reality space. A physical interface model **1201** is provided which models the various parts of the welding user interface **130,** console **135,** and ODD **150** in virtual reality space.

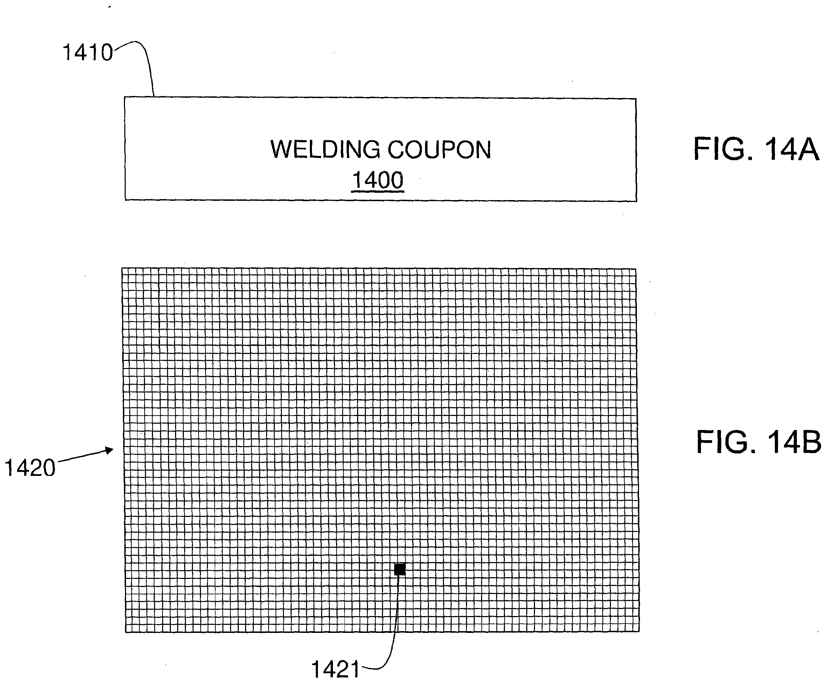

In accordance with an embodiment of the present invention, simulation of a weld puddle or pool in virtual reality space is accomplished where the simulated weld puddle has real-time molten metal fluidity and heat dissipation characteristics. At the heart of the weld puddle simulation is the welding physics functionality **1211** (a.k.a., the physics model) which is run on the GPUs **115,** in accordance with an embodiment of the present invention. The welding physics functionality employs a double displacement layer technique to accurately model dynamic fluidity/viscosity, solidity, heat gradient (heat absorption and dissipation), puddle wake, and bead shape, and is described in more detail herein with respect to Figs. 14A-14C.

The welding physics functionality **1211** communicates with the bead rendering functionality **1217** to render a weld bead in all states from the heated molten state to the cooled solidified state. The bead rendering functionality **1217** uses information from the welding physics functionality **1211** (e.g., heat, fluidity, displacement, dime spacing) to accurately and realistically render a weld bead in virtual reality space in real-time. The 3D textures functionality **1218** provides texture maps to the bead rendering functionality **1217** to overlay additional textures (e.g., scorching, slag, grain) onto the simulated weld bead. For example, slag may be shown rendered over a weld bead during and just after a welding process, and then removed to reveal the underlying weld bead. The renderer functionality **1216** is used to render various non-puddle specific characteristics using information from the special effects module **1222** including sparks, spatter, smoke, arc glow, fumes and gases, and certain discontinuities such as, for example, undercut and porosity.

The internal physics adjustment tool **1212** is a tweaking tool that allows various welding physics parameters to be defined, updated, and modified for the various welding processes. In accordance with an embodiment of the present invention, the internal physics adjustment tool **1212** runs on the CPU **111** and the adjusted or updated parameters are downloaded to the GPUs **115.** The types of parameters that may be adjusted via the internal physics adjustment tool **1212** include parameters related to welding coupons, process parameters that allow a process to be changed without having to reset a welding coupon (allows for doing a second pass), various global parameters that can be changed without resetting the entire simulation, and other various parameters.

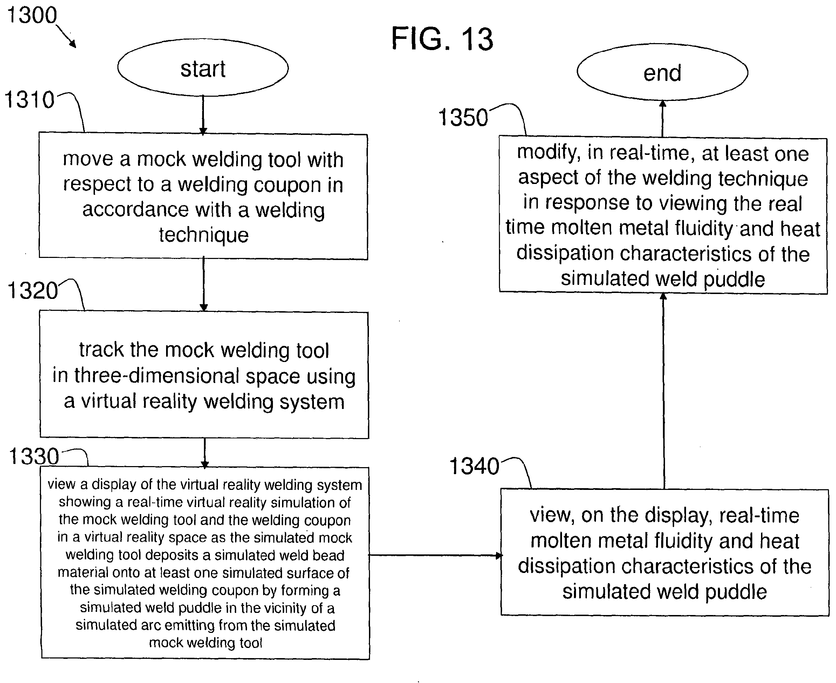

Fig. 13 is a flow chart of an embodiment of a method **1300** of training using the virtual reality training system **100** of Fig. 1. In step **1310,** move a mock welding tool with respect to a welding coupon in accordance with a welding technique. In step **1320,** track position and orientation of the mock welding tool in three-dimensional space using a virtual reality system. In step **1330,** view a display of the virtual reality welding system showing a real-time virtual reality simulation of the mock welding tool and the welding coupon in a virtual reality space as the simulated mock welding tool deposits a simulated weld bead material onto at least one simulated surface of the simulated welding coupon by forming a simulated weld puddle in the vicinity of a simulated arc emitting from said simulated mock welding tool. In step **1340,** view on the display, real-time molten metal fluidity and heat dissipation characteristics of the simulated weld puddle. In step **1350,** modify in real-time, at least one aspect of the welding technique in response to viewing the real-time molten metal fluidity and heat dissipation characteristics of the simulated weld puddle.

The method **1300** illustrates how a user is able to view a weld puddle in virtual reality space and modify his welding technique in response to viewing various characteristics of the simulated weld puddle, including real-time molten metal fluidity (e.g., viscosity) and heat dissipation. The user may also view and respond to other characteristics including real-time puddle wake and dime spacing. Viewing and responding to characteristics of the weld puddle is how most welding operations are actually performed in the real world. The double displacement layer modeling of the welding physics functionality **1211** run on the GPUs **115** allows for such real-time molten metal fluidity and heat dissipation characteristics to be accurately modeled and represented to the user. For example, heat dissipation determines solidification time (i.e., how much time it takes for a wexel to completely solidify).

Furthermore, a user may make a second pass over the weld bead material using the same or a different (e.g., a second) mock welding tool and/or welding process. In such a second pass scenario, the simulation shows the simulated mock welding tool, the welding coupon, and the original simulated weld bead material in virtual reality space as the simulated mock welding tool deposits a second simulated weld bead material merging with the first simulated weld bead material by forming a second simulated weld puddle in the vicinity of a simulated arc emitting from the simulated mock welding tool. Additional subsequent passes using the same or different welding tools or processes may be made in a similar manner. In any second or subsequent pass, the previous weld bead material is merged with the new weld bead material being deposited as a new weld puddle is formed in virtual reality space from the combination of any of the previous weld bead material, the new weld bead material, and possibly the underlying coupon material in accordance with certain embodiments of the present invention. Such subsequent passes may be needed to make a large fillet or groove weld, performed to repair a weld bead formed by a previous pass, for example, or may include a hot pass and one or more fill and cap passes after a root pass as is done in pipe welding. In accordance with various embodiments of the present invention, weld bead and base material may include mild steel, stainless steel, aluminum, nickel based alloys, or other materials.

Figs. 14A-14B illustrate the concept of a welding element (wexel) displacement map **1420,** in accordance with an embodiment of the present invention. Fig. 14A shows a side view of a flat welding coupon (WC) **1400** having a flat top surface **1410.** The welding coupon **1400** exists in the real world as, for example, a plastic part, and also exists in virtual reality space as a simulated welding coupon. Fig. 14B shows a representation of the top surface **1410** of the simulated WC **1400** broken up into a grid or array of welding elements (i.e., wexels) forming a wexel map **1420.** Each wexel (e.g., wexel **1421)** defines a small portion of the surface **1410** of the welding coupon. The wexel map defines the surface resolution. Changeable channel parameter values are assigned to each wexel, allowing values of each wexel to dynamically change in real-time in virtual reality weld space during a simulated welding process. The changeable channel parameter values correspond to the channels Puddle (molten metal fluidity/viscosity displacement), Heat (heat absorption/dissipation), Displacement (solid displacement), and Extra (various extra states, e.g., slag, grain, scorching, virgin metal). These changeable channels are referred to herein as PHED for Puddle, Heat, Extra, and Displacement, respectively.

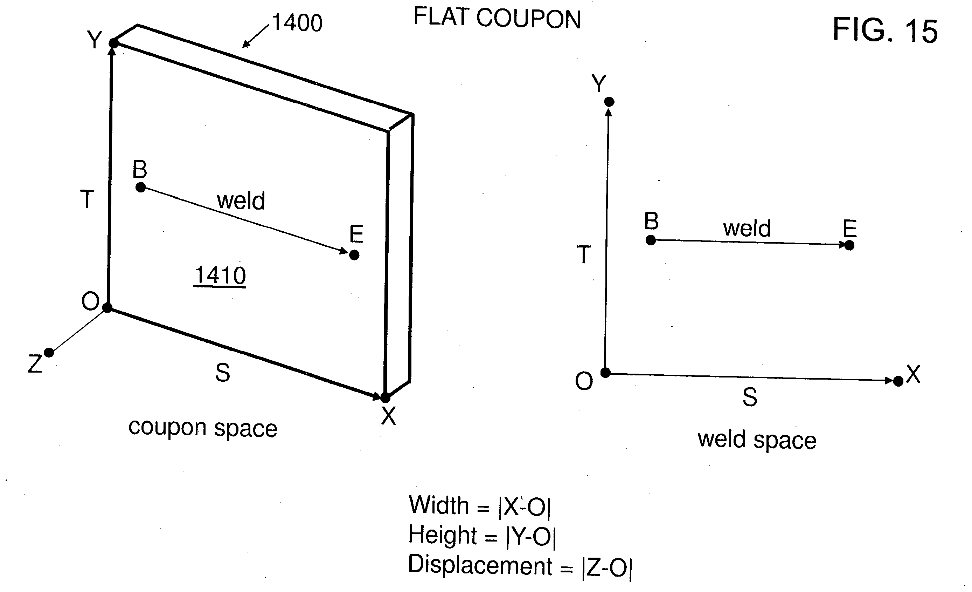

Fig. 15 illustrates an example embodiment of a coupon space and a weld space of the flat welding coupon (WC) **1400** of Fig. 14 simulated in the system **100** of Fig. 1. Points O, X, Y, and Z define the local 3D coupon space. In general, each coupon type defines the mapping from 3D coupon space to 2D virtual reality weld space. The wexel map **1420** of Fig. 14 is a two-dimensional array of values that map to weld space in virtual reality. A user is to weld from point B to point E as shown in Fig. 15. A trajectory line from point B to point E is shown in both 3D coupon space and 2D weld space in Fig. 15.

Each type of coupon defines the direction of displacement for each location in the wexel map. For the flat welding coupon of Fig. 15, the direction of displacement is the same at all locations in the wexel map (i.e., in the Z-direction). The texture coordinates of the wexel map are shown as S, T (sometimes called U, V) in both 3D coupon space and 2D weld space, in order to clarify the mapping. The wexel map is mapped to and represents the rectangular surface **1410** of the welding coupon **1400.**

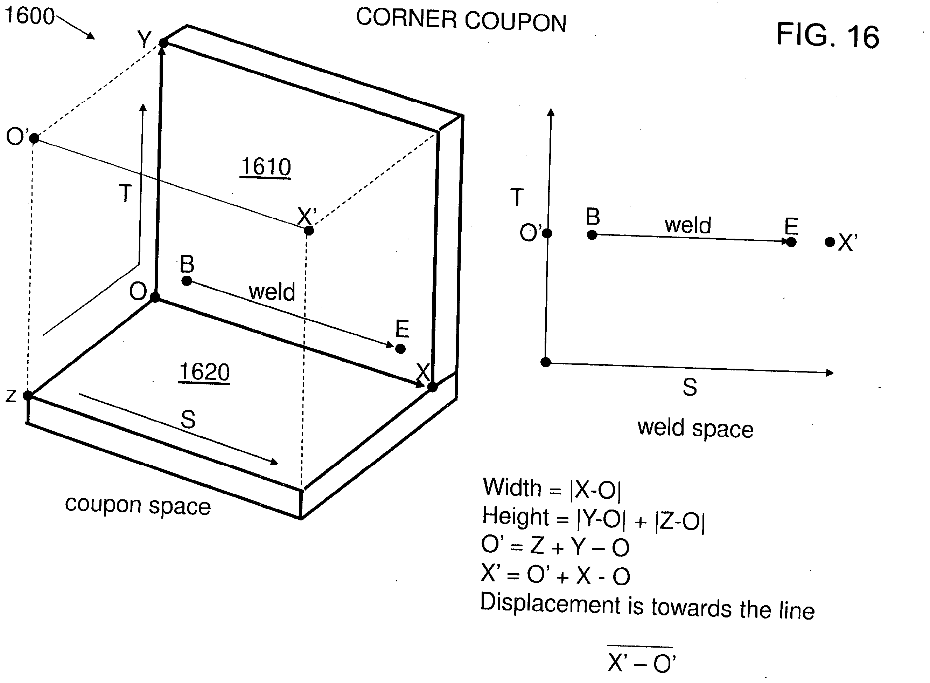

Fig. 16 illustrates an example embodiment of a coupon space and a weld space of a corner (tee joint) welding coupon (WC) **1600** simulated in the system **100** of Fig. 1. The corner WC **1600** has two surfaces **1610** and **1620** in 3D coupon space that are mapped to 2D weld space as shown in Fig. 16. Again, points O, X, Y, and Z define the local 3D coupon space. The texture coordinates of the wexel map are shown as S, T in both 3D coupon space and 2D weld space, in order to clarify the mapping. A user is to weld from point B to point E as shown in Fig. 16. A trajectory line from point B to point E is shown in both 3D coupon space and 2D weld space in Fig. 16. However, the direction of displacement is towards the line X'-O' as shown in the 3D coupon space, towards the opposite corner as shown in Fig. 16.

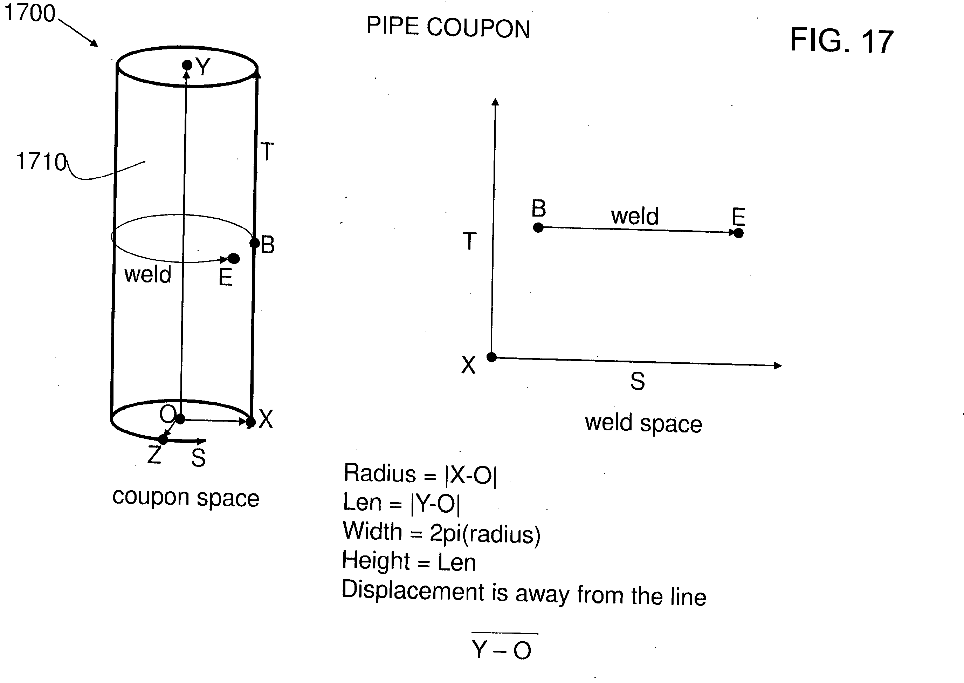

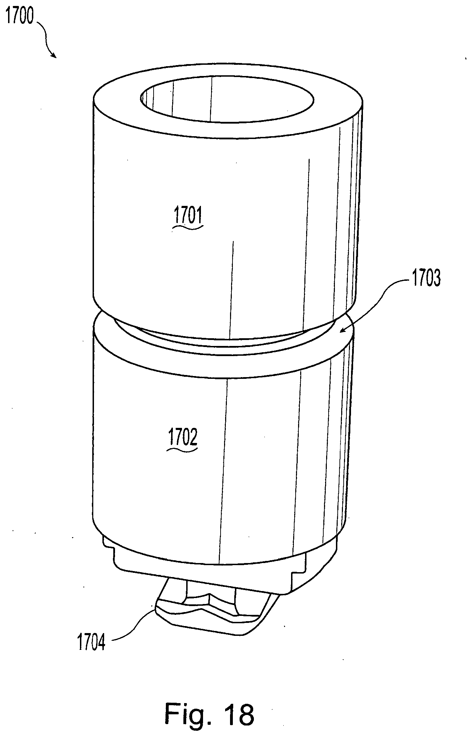

Fig. 17 illustrates an example embodiment of a coupon space and a weld space of a pipe welding coupon (WC) **1700** simulated in the system **100** of Fig. 1. The pipe WC **1700** has a curved surface **1710** in 3D coupon space that is mapped to 2D weld space as shown in Fig. 17. Again, points O, X, Y, and Z define the local 3D coupon space. The texture coordinates of the wexel map are shown as S, T in both 3D coupon space and 2D weld space, in order to clarify the mapping. A user is to weld from point B to point E along a curved trajectory as shown in Fig. 17. A trajectory curve and line from point B to point E is shown in 3D coupon space and 2D weld space, respectively, in Fig. 17. The direction of displacement is away from the line Y-O (i.e., away from the center of the pipe). Fig. 18 illustrates an example embodiment of the pipe welding coupon (WC) **1700** of Fig. 17. The pipe WC **1700** is made of a non-ferric, non-conductive plastic and simulates two pipe pieces **1701** and **1702** coming together to form a root joint **1703.** An attachment piece **1704** for attaching to the arm **173** of the T/S **170** is also shown.

In a similar manner that a texture map may be mapped to a rectangular surface area of a geometry, a weldable wexel map may be mapped to a rectangular surface of a welding coupon. Each element of the weldable map is termed a wexel in the same sense that each element of a picture is termed a pixel (a contraction of picture element). A pixel contains channels of information that define a color (e.g., red, green, blue, etc.). A wexel contains channels of information (e.g., P, H, E, D) that define a weldable surface in virtual reality space.

In accordance with an embodiment of the present invention, the format of a wexel is summarized as channels PHED (Puddle, Heat, Extra, Displacement) which contains four floating point numbers. The Extra channel is treated as a set of bits which store logical information about the wexel such as, for example, whether or not there is any slag at the wexel location. The Puddle channel stores a displacement value for any liquefied metal at the wexel location. The Displacement channel stores a displacement value for the solidified metal at the wexel location. The Heat channel stores a value giving the magnitude of heat at the wexel location. In this way, the weldable part of the coupon can show displacement due to a welded bead, a shimmering surface "puddle" due to liquid metal, color due to heat, etc. All of these effects are achieved by the vertex and pixel shaders applied to the weldable surface.

In accordance with an embodiment of the present invention, a displacement map and a particle system are used where the particles can interact with each other and collide with the displacement map. The particles are virtual dynamic fluid particles and provide the liquid behavior of the weld puddle but are not rendered directly (i.e., are not visually seen directly). Instead, only the particle effects on the displacement map are visually seen. Heat input to a wexel affects the movement of nearby particles. There are two types of displacement involved in simulating a welding puddle which include Puddle and Displacement. Puddle is "temporary" and only lasts as long as there are particles and heat present. Displacement is "permanent". Puddle displacement is the liquid metal of the weld which changes rapidly (e.g., shimmers) and can be thought of as being "on top" of the Displacement. The particles overlay a portion of a virtual surface displacement map (i.e., a wexel map). The Displacement represents the permanent solid metal including both the initial base metal and the weld bead that has solidified.

In accordance with an embodiment of the present invention, the simulated welding process in virtual reality space works as follows: Particles stream from the emitter (emitter of the simulated MWT **160)** in a thin cone. The particles make first contact with the surface of the simulated welding coupon where the surface is defined by a wexel map. The particles interact with each other and the wexel map and build up in real-time. More heat is added the nearer a wexel is to the emitter. Heat is modeled in dependence on distance from the arc point and the amount of time that heat is input from the arc. Certain visuals (e.g., color, etc.) are driven by the heat. A weld puddle is drawn or rendered in virtual reality space for wexels having enough heat. Wherever it is hot enough, the wexel map liquefies, causing the Puddle displacement to "raise up" for those wexel locations. Puddle displacement is determined by sampling the "highest" particles at each wexel location. As the emitter moves on along the weld trajectory, the wexel locations left behind cool. Heat is removed from a wexel location at a particular rate. When a cooling threshold is reached, the wexel map solidifies. As such, the Puddle displacement is gradually converted to Displacement (i.e., a solidified bead). Displacement added is equivalent to Puddle removed such that the overall height does not change. Particle lifetimes.are tweaked or adjusted to persist until solidification is complete. Certain particle properties that are modeled in the system 100 include attraction/repulsion, velocity (related to heat), dampening (related to heat dissipation), direction (related to gravity).

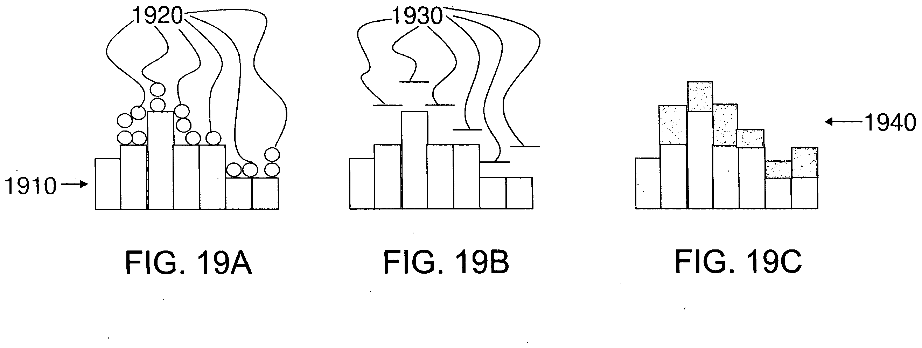

Figs. 19A-19C illustrate an example embodiment of the concept of a dual-displacement (displacement and particles) puddle model of the system **100** of Fig. 1. Welding coupons are simulated in virtual reality space having at least one surface. The surfaces of the welding coupon are simulated in virtual reality space as a double displacement layer including a solid displacement layer and a puddle displacement layer. The puddle displacement layer is capable of modifying the solid displacement layer.

As described herein, "puddle" is defined by an area of the wexel map where the Puddle value has been raised up by the presence of particles. The sampling process is represented in Figs. 19A-19C. A section of a wexel map is shown having seven adjacent wexels. The current Displacement values are represented by un-shaded rectangular bars **1910** of a given height (i.e., a given displacement for each wexel). In Fig. 19A, the particles **1920** are shown as round un-shaded dots colliding with the current Displacement levels and are piled up. In Fig. 19B, the "highest" particle heights **1930** are sampled at each wexel location. In Fig. 19C, the shaded rectangles **1940** show how much Puddle has been added on top of the Displacement as a result of the particles. The weld puddle height is not instantly set to the sampled values since Puddle is added at a particular liquification rate based on Heat. Although not shown in Figs. 19A-19C, it is possible to visualize the solidification process as the Puddle (shaded rectangles) gradually shrink and the Displacement (un-shaded rectangles) gradually grow from below to exactly take the place of the Puddle. In this manner, real-time molten metal fluidity characteristics are accurately simulated. As a user practices a particular welding process, the user is able to observe the molten metal fluidity characteristics and the heat dissipation characteristics of the weld puddle in real-time in virtual reality space and use this information to adjust or maintain his welding technique.

The number of wexels representing the surface of a welding coupon is fixed. Furthermore, the puddle particles that are generated by the simulation to model fluidity are temporary, as described herein. Therefore, once an initial puddle is generated in virtual reality space during a simulated welding process using the system **100,** the number of wexels plus puddle particles tends to remain relatively constant. This is because the number of wexels that are being processed is fixed and the number of puddle particles that exist and are being processed during the welding process tend to remain relatively constant because puddle particles are being created and "destroyed" at a similar rate (i.e., the puddle particles are temporary). Therefore, the processing load of the PPS **110** remains relatively constant during a simulated welding session.

In accordance with an alternate embodiment of the present invention, puddle particles may be generated within or below the surface of the welding coupon. In such an embodiment, displacement may be modeled as being positive or negative with respect to the original surface displacement of a virgin (i.e., un-welded) coupon. In this manner, puddle particles may not only build up on the surface of a welding coupon, but may also penetrate the welding coupon. However, the number of wexels is still fixed and the puddle particles being created and destroyed is still relatively constant.

In accordance with alternate embodiments of the present invention, instead of modeling particles, a wexel displacement map may be provided having more channels to model the fluidity of the puddle. Or, instead of modeling particles, a dense voxel map may be modeled. Or, instead of a wexel map, only particles may be modeled which are sampled and never go away. Such alternative embodiments may not provide a relatively constant processing load for the system, however.

Furthermore, in accordance with an embodiment of the present invention, blow-through or a keyhole is simulated by taking material away. For example, if a user keeps an arc in the same location for too long, in the real world, the material would burn away causing a hole. Such real-world burnthrough is simulated in the system **100** by wexel decimation techniques. If the amount of heat absorbed by a wexel is determined to be too high by the system **100,** that wexel may be flagged or designated as being burned away and rendered as such (e.g., rendered as a hole). Subsequently, however, wexel re-constitution may occur for certain welding processs (e.g., pipe welding) where material is added back after being initially burned away. In general, the system **100** simulates wexel decimation (taking material away) and wexel reconstitution (i.e., adding material back). Furthermore, removing material in root-pass welding is properly simulated in the system **100.**

Furthermore, removing material in root-pass welding is properly simulated in the system **100.** For example, in the real world, grinding of the root pass may be performed prior to subsequent welding passes. Similarly, system **100** may simulate a grinding pass that removes material from the virtual weld joint. It will be appreciated that the material removed may be modeled as a negative displacement on the wexel map. That is to say that the grinding pass removes material that is modeled by the system **100** resulting in an altered bead contour. Simulation of the grinding pass may be automatic, which is to say that the system **100** removes a predetermined thickness of material, which may be respective to the surface of the root pass weld bead.

In an alternative embodiment, an actual grinding tool, or grinder, may be simulated that turns on and off by activation of the mock welding tool **160** or another input device. It is noted that the grinding tool may be simulated to resemble a real world grinder. In this embodiment, the user maneuvers the grinding tool along the root pass to remove material responsive to the movement thereof. It will be understood that the user may be allowed to remove too much material. In a manner similar to that described above, holes or other defects (described above) may result if the user grinds away too much material. Still, hard limits or stops may be implemented, i.e. programmed, to prevent the user from removing too much material or indicate when too much material is being removed.

In addition to the non-visible "puddle" particles described herein, the system **100** also uses three other types of visible particles to represent Arc, Flame, and Spark effects, in accordance with an embodiment of the present invention. These types of particles do not interact with other particles of any type but interact only with the displacement map. While these particles do collide with the simulated weld surface, they do not interact with each other. Only Puddle particles interact with each other, in accordance with an embodiment of the present invention. The physics of the Spark particles is setup such that the Spark particles bounce around and are rendered as glowing dots in virtual reality space.

The physics of the Arc particles is setup such that the Arc particles hit the surface of the simulated coupon or weld bead and stay for a while. The Arc particles are rendered as larger dim bluish-white spots in virtual reality space. It takes many such spots superimposed to form any sort of visual image. The end result is a white glowing nimbus with blue edges.

The physics of the Flame particles is modeled to slowly raise upward. The Flame particles are rendered as medium sized dim red-yellow spots. It takes many such spots superimposed to form any sort of visual image. The end result is blobs of orange-red flames with red edges raising upward and fading out. Other types of non-puddle particles may be implemented in the system **100,** in accordance with other embodiments of the present invenntion. For example, smoke particles may be modeled and simulated in a similar manner to flame particles.

The final steps in the simulated visualization are handled by the vertex and pixel shaders provided by the shaders **117** of the GPUs **115.** The vertex and pixel shaders apply Puddle and Displacement, as well as surface colors and reflectivity altered due to heat, etc. The Extra (E) channel of the PHED wexel format, as discussed earlier herein, contains all of the extra information used per wexel. In accordance with an embodiment of the present invention, the extra information includes a non virgin bit (true=bead, false=virgin steel), a slag bit, an undercut value (amount of undercut at this wexel where zero equals no undercut), a porosity value (amount of porosity at this wexel where zero equals no porosity), and a bead wake value which encodes the time at which the bead solidifies. There are a set of image maps associated with different coupon visuals including virgin steel, slag, bead, and porosity. These image maps are used both for bump mapping and texture mapping. The amount of blending of these image maps is controlled by the various flags and values described herein.

A bead wake effect is achieved using a 1D image map and a per wexel bead wake value that encodes the time at which a given bit of bead is solidified. Once a hot puddle wexel location is no longer hot enough to be called "puddle", a time is saved at that location and is called "bead wake". The end result is that the shader code is able to use the 1D texture map to draw the "ripples" that give a bead its unique appearance which portrays the direction in which the bead was laid down. In accordance with an alternative embodiment of the present invention, the system **100** is capable of simulating, in virtual reality space, and displaying a weld bead having a real-time weld bead wake characteristic resulting from a real-time fluidity-to-solidification transition of the simulated weld puddle, as the simulated weld puddle is moved along a weld trajectory.

In accordance with an alternative embodiment of the present invention, the system **100** is capable of teaching a user how to troubleshoot a welding machine. For example, a troubleshooting mode of the system may train a user to make sure he sets up the system correctly (e.g., correct gas flow rate, correct power cord connected, etc.) In accordance with another alternate embodiment of the present invention, the system **100** is capable of recording and playing back a welding session (or at least a portion of a welding session, for example, N frames). A track ball may be provided to scroll through frames of video, allowing a user or instructor to critique a welding session. Playback may be provided at selectable speeds as well (e.g., full speed, half speed, quarter speed). In accordance with an embodiment of the present invention, a split-screen playback may be provided, allowing two welding sessions to be viewed side-by-side, for example, on the ODD **150.** For example, a "good" welding session may be viewed next to a "poor" welding session for comparison purposes.

In summary, disclosed is a real-time virtual reality welding system including a programmable processor-based subsystem, a spatial tracker operatively connected to the programmable processor-based subsystem, at least one mock welding tool capable of being spatially tracked by the spatial tracker, and at least one display device operatively connected to the programmable processor-based subsystem. The system is capable of simulating, in virtual reality space, a weld puddle having real-time molten metal fluidity and heat dissipation characteristics. The system is further capable of displaying the simulated weld puddle on the display device in real-time.

### ENHANCED USER EXPERIENCE

One embodiment provides a virtual reality arc welding system. The system includes a programmable processor-based subsystem, a spatial tracker operatively connected to the programmable processor-based subsystem, at least one wireless mock welding tool configured to wirelessly communicate with the programmable processor-based subsystem and the spatial tracker, and at least one wireless face-mounted display device configured to wirelessly communicate with the programmable processor-based subsystem and the spatial tracker. A wireless mock welding tool and a wireless face-mounted display may provide the user of the system with more mobility and flexibility during a simulated welding process. The system is configured to simulate, in a virtual reality environment, a weld puddle having real-time molten metal fluidity and heat dissipation characteristics, and display the simulated weld puddle on the at least one wireless face-mounted display device in real time. The system may also include a wireless hub device communicatively wired to the programmable processor-based subsystem and the spatial tracker, wherein the at least one wireless mock welding tool and the at least one wireless face-mounted display device each wirelessly communicate with the programmable processor-based subsystem and the spatial tracker through the wireless hub device. The system may further include a mock welding cable attached to the at least one mock welding tool and configured to simulate at least a weight and a stiffness of a real welding cable.

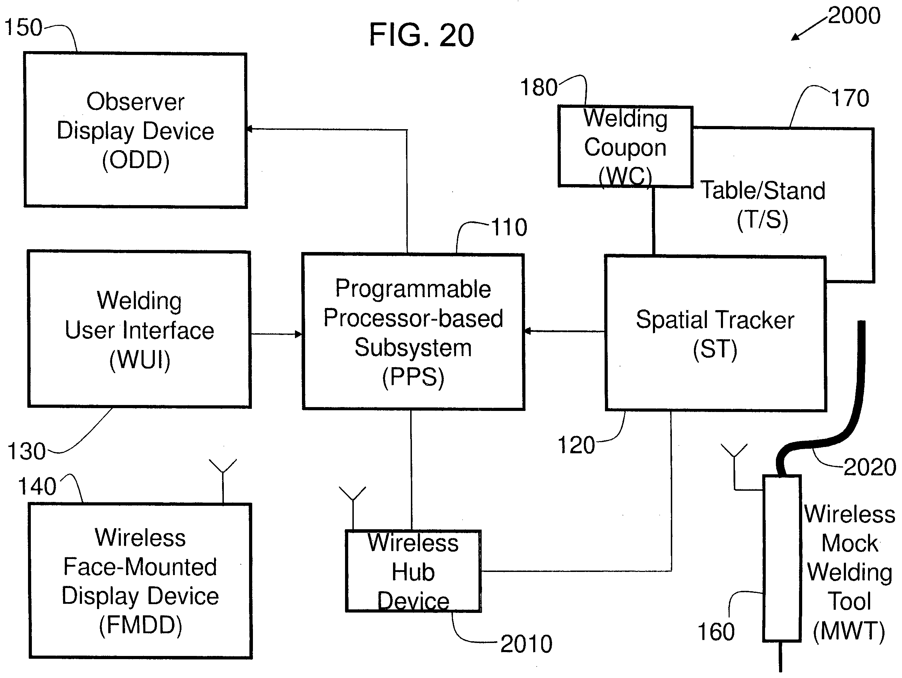

Fig. 20 illustrates a second example embodiment of a system block diagram of a system **2000** providing arc welding training in a real-time virtual reality environment. The system **2000** is similar to the system **100** of Fig. 1. However, in accordance with an embodiment, the system **2000** includes a wireless hub device **2010** that is operatively wired to the PPS **110** and the ST **120** to communicate with each, respectively. The wireless hub device **2010** allows any truly wireless component of the system **2000** to communicate with the PPS **110** and/or the ST **120.**

In accordance with an embodiment, in the system **2000** of Fig. 20, the mock welding tool (MWT) **160** is wireless and the face-mounted display device (FMDD) **140** is wireless and each communicate with the PPS **110** and the ST **120** via the wireless hub device **2010.** Other optional elements of the system may be wireless as well such as, for example, a foot pedal device for controlling simulated welding current for a gas tungsten arc welding simulation. In accordance with an alternative embodiment, the wireless hub device **2010** is not present and, instead, the PPS **110** and the ST **120** are each configured to wirelessly communicate directly with the wireless FMDD **140** and/or the wireless MWT **160.** Wireless communication, as discussed herein, may be accomplished through any of various types of wireless technologies including radio frequency technologies such as, for example, WiFi or Bluetooth^{®}. Other wireless technologies such as, for example, infrared technologies or acoustic technologies may also be employed, in accordance with various other embodiments.

In accordance with an embodiment, even though the mock welding tool is wireless and, therefore, does not need to have a wired connection to any other part of the system **2000,** a mock welding cable **2020** may be attached to the wireless mock welding tool to simulate a weight and a stiffness of a real welding cable. In this manner, a welding student would not be mislead by the ease-of-use of a wireless mock welding tool without such a mock welding cable.

Another embodiment provides a method of using a virtual reality welding system. The method includes displaying an image of a virtual weld joint having a weld bead, on a display device of a virtual reality welding system, that was generated using the virtual reality welding system. The method further includes scrolling across a length dimension of the image of the virtual weld joint using a user interface of the virtual reality welding system, and displaying an image of a cross-sectional area through the virtual weld joint at successive locations along the length dimension of the image of the virtual weld joint on the display device of the virtual reality welding system in response to the scrolling. The method may also include displaying a cross-section indicator on the display device of the virtual reality welding system indicating a location along the length dimension of the image of the virtual weld joint corresponding to the image of the displayed cross-sectional area. The method may further include stopping the scrolling at a location along the length dimension of the image of the virtual weld joint and observing a displayed image of a cross-sectional area through the virtual weld joint at the location. A displayed image of the cross-sectional area through the virtual weld joint at a location along the length dimension of the image of the virtual weld joint may show welding characteristics of the virtual weld joint at the location as simulated by the virtual reality welding system. The welding characteristics may include, for example, virtual penetration into a virtual welding coupon and internal defects and discontinuities, as simulated by the virtual reality welding system. The method may also include automatically looping in time across a length dimension of the image of the virtual weld joint between a first location and a second location, successively displaying in time during the looping an image of the cross-sectional area through the virtual weld joint at each of a plurality of defined locations spanning from the first location to the second location.

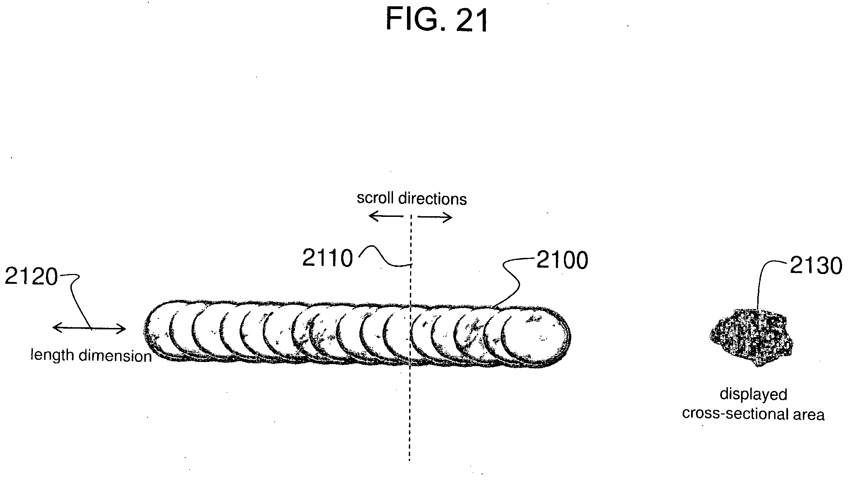

Fig. 21 illustrates a displayed image of a virtual weld joint **2100** having a weld bead appearance that may be displayed on a display device of a virtual reality welding system (e.g., the system **100).** In accordance with an embodiment, the virtual weld joint **2100** is generated using the virtual reality welding system and is represented within the virtual reality welding system as stored data being representative of the virtual weld joint **2100** in three-dimensions. Therefore, the virtual weld joint **2100** is represented within the virtual reality welding system as having both external and internal characteristics.

The external characteristics may include, for example, shape, color, slag, size, and stacked dimes appearance. The internal characteristics may include, for example, an amount of penetration into a virtual welding coupon and internal defects and discontinuities, properly represented in three-dimensions. The internal and external characteristics of the virtual weld joint **2100** are a result of the virtual welding process that created the virtual weld joint **2100,** including user technique and the modeled physics and metallurgical properties simulated in real time in the virtual reality welding system.

In accordance with an embodiment, a user may use a portion of the user interface **130** or **150** (e.g., a trackball, a knob, a button, a joystick, or a user's finger dragged across a touch-screen display device) to scroll a cross-section indicator **2110** across a length dimension **2120** of the displayed image of the virtual weld joint in one direction or the other. In Fig. 21, the cross-section indicator **2110** is shown as a displayed dotted line intersecting the displayed virtual weld joint **2100** at a particular location.

Based on the location of the cross-section indicator **2110** along the length of the image of the virtual weld joint **2100,** the virtual reality welding system displays an image of the cross-sectional area **2130** of the virtual weld joint **2100** at that location showing the internal characteristics of the virtual weld joint. As the user moves the location of the cross-section indicator **2110** along the length of the image of the virtual weld joint **2100,** a different image of a different cross-sectional area corresponding to the new location is displayed. In accordance with an embodiment, a defined number of equally spaced images of cross-sectional areas are generated by the virtual reality welding system across the length dimension **2120** of the virtual weld joint **2100.** The cross-sectional images may be generated automatically as the virtual weld joint **2100** is formed, or after the virtual weld joint 2100 is formed, for example, upon command of the user.

In this manner, a user may scroll across the length of the image of the virtual weld joint to selectively display and observe the internal characteristics of the virtual weld joint at different locations. As an example, a user may find that the internal characteristics along one part of the virtual weld joint are much better than the internal characteristics along another part of the virtual weld joint, even though the external characteristics may look fine along both parts. The user may then explore how to change one or more aspects of his welding technique to improve the internal characteristics across the entire weld joint.

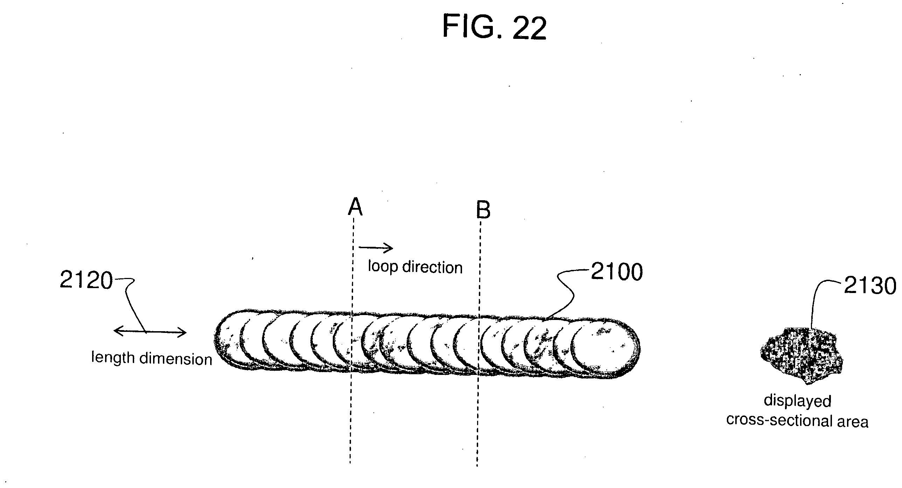

Fig. 22 illustrates the displayed image of the virtual weld joint **2100** of Fig. 21 having a weld bead appearance, that may be displayed on a display device of a virtual reality welding system. In accordance with an embodiment, a user may employ a user interface of the virtual reality welding system to designate a first location **"A"** and a second location **"B"** along the length dimension **2120** of the image of the virtual weld joint **2100** over which the cross-section indicator **2110** may loop. Furthermore, the virtual reality welding system may be commanded to automatically loop in time across the length dimension **2120** of the image of the virtual reality weld joint **2100** between the first location **"A"** and the second location **"B",** successively displaying in time during the looping an image of a cross-sectional area **2130** through the virtual weld joint **2100** at each of a plurality of defined locations spanning from the first location **"A"** to the second location "B".

The number of defined locations and corresponding images of cross-sectional areas between location **"A"** and location **"B"** depend on the resolution and data processing capability of the virtual reality welding system. For example, in accordance with an embodiment, there may be sixty-four (64) equally spaced defined locations from the first location "A" to the second location **"B".** As a result, the virtual reality welding system may loop through sixty-four (64) unique images of corresponding cross-sectional areas of the virtual weld joint **2100.** In accordance with an embodiment, a user may be able to scroll and loop along the circumference dimension of a virtual weld joint of a pipe in a similar manner to view cross-sectional areas. Again, the cross-sectional images may be generated automatically as the virtual weld joint **2100** is formed, or after the virtual weld joint **2100** is formed, for example, upon command of the user.

A further embodiment provides a method of using a virtual reality welding system. The method includes generating a virtual weld joint having a virtual weld bead using a virtual reality welding system. The virtual weld joint is represented within the virtual reality welding system as a first digital data set. The method further includes generating a three-dimensional (3D) digital model representative of at least a portion of the virtual weld joint using the first digital data set on the virtual reality welding system, wherein the 3D digital model is operatively compatible with a 3D printing system. The method may also include transferring the 3D digital model to the 3D printing system, and printing a 3D physical model representative of at least a portion of the virtual weld joint using the 3D digital model on the 3D printing system. The 3D physical model may be made of at least one of a plastic material, a metal material, or a ceramic material. The virtual weld joint may include a virtual welding coupon as modified by the virtual weld bead. The 3D printing system may be in operative communication with the virtual reality welding system and the transferring of the 3D digital model may be accomplished via the operative communication. The operative communication between the virtual reality welding system and the 3D printing system may be via a wired means or via, at least in part, a wireless means.

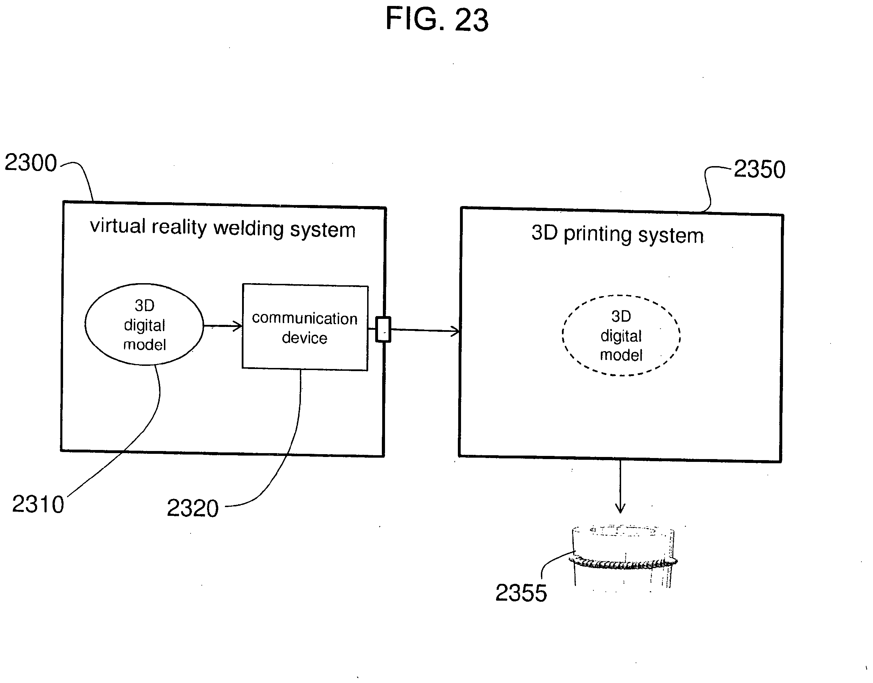

Fig. 23 illustrates a virtual reality welding system **2300** in operative communication with a 3D printing system **2350.** The virtual reality welding system **2300** is similar to the system **100** of Fig. 1. However, the system **2300** is further configured to generate a 3D digital model **2310** representative of at least a portion of a virtual weld joint and communicate the 3D digital model **2310** (e.g., in the form of a digital file) to a 3D printing system. The virtual weld joint is initially generated using the virtual reality welding system **2300** and is represented within the virtual reality welding system (e.g., stored in memory) as a first digital data set. The first digital data set includes the same type of data generated by the system **100** of Fig. 1 when generating a virtual weld joint. However, unlike the system 100, the virtual reality welding system **2300** is further configured to process the first digital data set to generate the 3D digital model **2310.**

In accordance with an embodiment, the 3D digital model **2310** is a computer-aided design (CAD) model, for example. Other types of 3D digital models may be possible as well, in accordance with various other embodiments. In accordance with an embodiment, the PPS **110** of the virtual reality welding system **2300** employs a conversion software module specifically programmed to read the first digital data set and convert the first digital data set to the 3D digital model **2310.** The term "3D digital model" as used herein refers to data and/or instructions that are in a digital format (e.g., a digital electronic format stored on a computer-readable medium) that may be read by a computer-based or processor-based apparatus such as the 3D printing system **2300.** Once the 3D digital model **2310** is generated, the model **2310** may be transferred to the 3D printing system **2350** for 3D printing as long as the model **2310** is compatible with the 3D printing system **2350.**

In accordance with an embodiment, the virtual reality welding system **2300** includes a communication device **2320.** The communication device **2320** is operatively connected to the programmable processor-based subsystem **110** of the virtual reality welding system **2300** and provides all of the circuitry and/or software for transmitting data in a digitally communicated manner. For example, the communication device **2320** may include an Ethernet port and Ethernet-capable transmitting circuitry. As another example, the communication device **2320** may provide a wireless Bluetooth^{™} communication connection. Alternatively, the communication device **2320** may be a device that accepts and writes to a non-transitory computer-readable medium such as a computer disk or a flash drive data storage device, for example. As a further alternative embodiment, the communication device **2320** may be a modem device providing connection to the internet. Other types of communication devices are possible as well, in accordance with various embodiments. In accordance with an embodiment, the 3D printing system **2350** is operatively compatible with the communication device **2320.**

Referring to Fig. 23, the 3D printing system **2350** may be a commercially available system where the virtual reality welding system **2300** is configured to be compatible with the 3D printing system **2350,** in accordance with an embodiment. The 3D printing system prints a physical model **2355** by spraying or otherwise transferring a material substance in multiple layers onto a construction surface, beginning with a bottom layer. The 3D printing system **2350** processes the 3D digital model **2310** to effectively slice the model into a plurality of horizontal layers. The horizontal layers are printed one onto another by the 3D printing system until the completed physical model **2355** emerges. As shown in Fig. 23, the physical model **2355** corresponds to a virtual weld joint including two virtual pieces of pipe that were virtually joined together using the virtual reality welding system **2300.**

The 3D physical model **2355** may be made of any of a number of different types of materials, depending on the 3D printing system **2350,** including a plastic material, a metal material, or a ceramic material, for example. One type of 3D printing process includes heating a granular substance with a laser for each layer of the physical model and allowing the granular substance to solidify. Other 3D printing processes deposit layers of a substance in a manner not unlike that of an automated glue gun and may use ultraviolet light as a means to cure the layers.

In accordance with an embodiment, the virtual reality welding system **2300** is configured to accurately model both the exterior and the interior of the virtual weld joint in the 3D digital model. As such, after printing out a corresponding 3D physical model, a user may destructively cut open the physical model (or non-destructively image the interior of the physical model) to view the interior characteristics of the weld joint. In accordance with an alternative embodiment, only the exterior of the virtual weld joint is accurately modeled in the 3D digital model. Such modeling of only the exterior may reduce the amount of information making up the 3D digital model and result in reduced processing time of both the virtual reality welding system (to generate the 3D digital model) and the 3D printing system (to print the 3D physical model).

In this manner, a user of a virtual reality welding system may generate a physical weld joint that is representative of a virtual weld joint generated by the user on the virtual reality welding system. The user may take the physical weld joint home with him as a memento of his virtual reality welding experience.

Another embodiment provides a method tying a virtual reality welding system to an on-line welding game. The method includes tracking a user's virtual reality welding progress on a virtual reality welding system and generating an electronic file of user statistics representative of the user's virtual reality welding progress on the virtual reality welding system. The method further includes transferring the electronic file, via an external communication infrastructure, from the virtual reality welding system to a server computer providing an on-line welding game. The method also includes the on-line welding game reading the electronic file and updating a gaming profile of the user with respect to the on-line welding game based on the user statistics in the electronic file. The user statistics may include at least one of data representative of types of welding processes the user has successfully performed on the virtual reality welding system, data representative of types of welding skills the user has successfully mastered on the virtual reality welding system, and data representative of reward points earned by the user on the virtual reality welding system that may be redeemed via the on-line welding game. The gaming profile of the user includes at least one of types of welding projects in which the user is permitted to participate in the on-line welding game and specific types of welding processes in which the user is permitted to perform in the on-line welding game. The method may further include comparing the user statistics of the user to a plurality of other users and ranking the user and the plurality of other users with respect to each other based on the comparing.

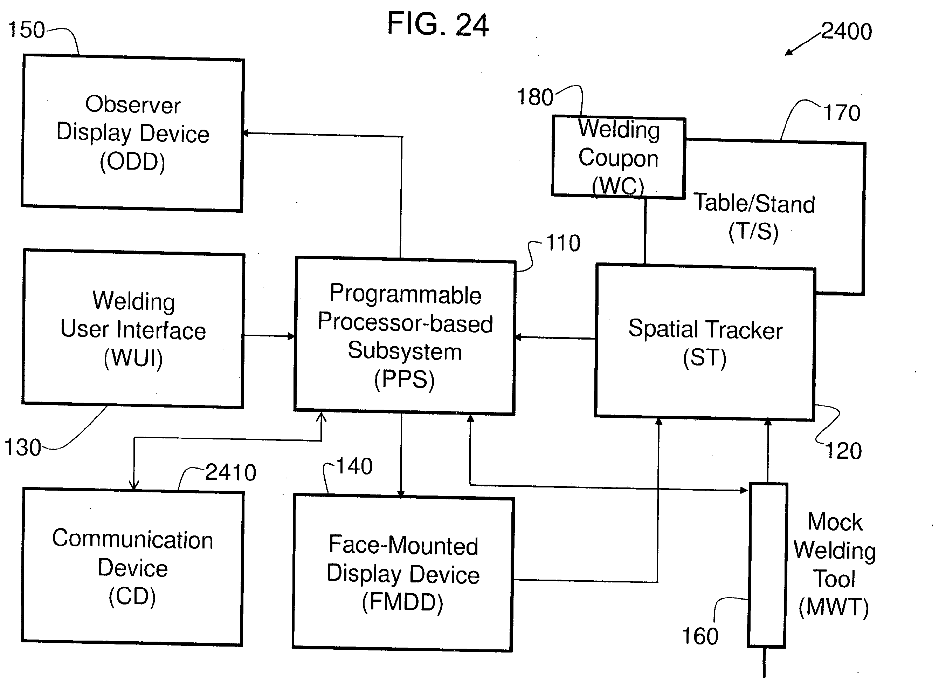

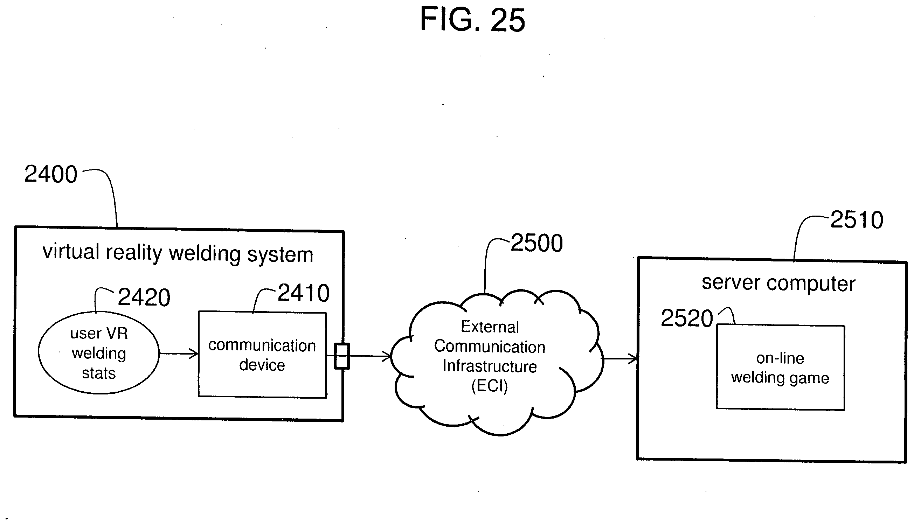

Fig. 24 illustrates an embodiment of a virtual reality welding system **2400.** The virtual reality welding system **2400** is similar to the system 100 of Fig. 1. However, the system **2400** is further configured to track a user's virtual reality welding progress on the virtual reality welding system **2400** and generate an electronic file **2420** (see Fig. 25) of user statistics representative of the user's progress. In accordance with an embodiment, the PPS **110** tracks the user's virtual reality welding progress on the virtual reality welding system **2400** and generates the electronic file **2420** of user statistics representative of the user's progress.

In accordance with an embodiment, the virtual reality welding system **2400** includes a communication device **2410.** The communication device **2410** is operatively connected to the programmable processor-based subsystem **110** of the virtual reality welding system **2400** and provides all of the circuitry and/or software for externally transmitting data in a digitally communicated manner. For example, the communication device **2410** may be a modem device providing connection to the internet.

Fig. 25 illustrates an embodiment showing the virtual reality welding system **2400** in operative communication with a server computer **2510** via an external communication infrastructure **2500.** The external communication infrastructure **2500** may include, for example, one or more of the internet, a cellular telephone network, or a satellite communication network. The server computer **2510** provides an on-line welding game **2520.** In accordance with an embodiment, the on-line welding game **2520** is a computer-based game that a user may play on-line using, for example, a personal computer (e.g., a desktop computer) or a mobile computing device (e.g., a smart phone). The on-line welding game **2520** may provide, for example, various welding projects requiring various user welding skills, acquired on the virtual reality welding system **2400,** to play the game. A user of the on-line welding game **2520** may earn points and/or rewards as part of successfully completing a welding project of the game.

Types of welding processes that a user may perform on the virtual reality welding system **2400** may include, for example, a shielded metal arc welding process, a gas metal arc welding process, a flux-cored arc welding process, and a gas tungsten arc welding process. Types of welding skills that a user may acquire using the virtual reality welding system **2400** may include, for example, how to set up a system for a particular welding process, how to prepare metal for welding, how to properly hold a welding gun/torch during a particular welding process, how to strike an arc at the start of a particular welding, how to move the welding electrode during a particular welding process, various plate welding skills, and various pipe welding skills. Other types of welding processes and skills are possible as well, in accordance with other various embodiments. Such welding processes and skills may be included in the file of the user's virtual reality welding statistics **2420** once the user has demonstrated sufficient proficiency with respect to those processes and skills.

The on-line welding game **2520** may provide various welding projects as part of the game such as, for example, a bridge project, an automobile project, and a sky scraper building project. In general, a user cannot work on a welding project that is part of the on-line welding game **2520** until the statistics (i.e., data) in the user's electronic file from the virtual reality welding system **2400** indicate that the user is ready to work on that welding project. In accordance with an embodiment, the on-line welding game **2520** of the server computer **2510** reads the electronic file **2420** having the user's virtual reality welding statistics and updates a gaming profile of the user based on the user statistics. For example, statistics in the electronic file for a user may be interpreted by the on-line welding game **2520** to upgrade the user's gaming profile to allow the user to work on a sky scraper building project using a shielded metal arc welding (stick electrode) process.

Furthermore, as a user progresses on the virtual reality welding system **2400,** the user may earn reward points that may be transferred to the on-line welding game **2520** via the electronic file. In accordance with an embodiment, the user may redeem the reward points using the on-line welding game **2520.** For example, the user may use the reward points to purchase merchandise on-line (e.g., a T-shirt that advertises the on-line welding game). Alternatively, the user may use the reward points to gain access to some advanced features of the on-line welding game.

In accordance with an embodiment, the statistics of one user may be compared to the statistics of other users on the server computer **2510** to rank all of the users with respect to each other. The rankings may be presented to the users as part of the on-line welding game, for example. Rankings may be by different levels of locality including, for example, a state level ranking, a national level ranking, and a world level ranking.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment disclosed, but that the invention will include all embodiments falling within the scope of the appended claims.

**REFERENCE NUMBERS**

| | | | |
|---|---|---|---|
| 100 | system | 135 | console |
| 110 | processor-based subsystem | 136 | knob |
| 111 | central processing unit | 137 | knob |
| 115 | graphic processing unit | 140 | face-mounted display device |
| 116 | compute unified device architecture | 150 | observer display device |
| 117 | shader | 151 | welding parameters |
| 118 | video output | 152 | welding discontinuity state |
| 119 | video output | 153 | user selection |
| 120 | spatial tracker | 160 | mock welding tool |
| 121 | magnetic source | 161 | holder |
| 122 | sensor | 162 | electrode |
| 123 | disk | 163 | tactilely resistive tip |
| 124 | power source | 170 | table/stand |
| 125 | cable | 171 | table |
| 126 | tracking unit | 172 | stand / base |
| 130 | welding user interface | 173 | arm |
| 131 | set of buttons | 174 | vertical post |
| 132 | joystick | 175 | welding coupon |
| 133 | knob | 175' | pipe |
| 134 | knob | 175" | pipe |
| | | 180 | welding coupon |
| 900 | welding helmet | 1220 | scoring and tolerance functionality |
| 910 | earbud speaker | 1221 | tolerance editor |
| 1201 | physical interface | 1222 | special effects |
| 1202 | clamp model | 1300 | method |
| 1203 | environment model | 1310 | step |
| 1204 | sound content functionality | 1320 | step |
| 1205 | welding sound | 1330 | step |
| 1206 | stand/table model | 1340 | step |
| 1207 | internal architecture functionality | 1350 | step |
| 1208 | calibration functionality | 1400 | welding coupon |
| 1210 | coupon model | 1410 | surface |
| 1211 | welding physics | 1420 | displacement map |
| 1212 | internal physics adjustment tool / tweaker | 1421 | wexel |
| 1213 | graphical user interface functional-ity | 1600 | welding coupon |
| | | 1610 | surface |
| 1214 | graphing functionality | 1620 | surface |
| 1215 | student reports functionality | 1700 | welding coupon |
| 1216 | renderer | 1701 | pipe piece |
| 1217 | bead rendering | 1702 | pipe piece |
| 1218 | 3D texture | 1703 | root joint |
| 1219 | visual cues functionality | 1704 | attachment piece |
| | | 1710 | surface |
| 1910 | bar | 2510 | server computer |
| 1920 | particle | 2520 | welding game |
| 1930 | height | A | location |
| 1940 | rectangles | B | location |
| 2000 | system | E | point |
| 2010 | wireless hub device | O | point |
| 2020 | mock welding cable | S | texture coordinate |
| 2100 | weld joint | T | texture coordinate |
| 2110 | cross-section indicator | X | point |
| 2120 | length dimension | Y | point |
| 2130 | cross sectional area | Z | point |
| 2300 | welding system | | |
| 2310 | digital model | | |
| 2320 | communication device | | |
| 2350 | printing system | | |
| 2355 | physical model | | |
| 2400 | welding system | | |
| 2410 | communication device | | |
| 2420 | electronic file | | |
| 2500 | communication infrastructure | | |

## Claims

1. A method comprising:
generating a simulated weld joint having a simulated weld bead, using a simulated welding system (100, 2000, 2400), the simulated reality welding system comprising
a programmable processor-based subsystem (110);
a spatial tracker (120) operatively connected to the programmable processor-based subsystem (110);
at least one mock welding tool (160) configured to communicate with the programmable processor-based subsystem (110) and the spatial tracker (120);
a display device configured to communicate with the programmable processor-based subsystem (110) and the spatial tracker (120),
simulating the simulated weld bead based on tracked position and orientation of the mock welding tool in three-dimensional space; and
displaying an image of the simulated weld joint having the simulated weld bead, on a display device of the simulated welding system (100, 2000, 2400); **characterized by**
the method further including scrolling across a length dimension of the image of the simulated weld joint using a user interface, and displaying an image of a cross-sectional area through the simulated weld joint at successive locations along the length dimension of the image of the simulated weld joint on the display.

2. The method of claim 1, further comprising displaying a cross-section indicator on the display device of the system indicating a location along the length dimension of the image of the simulated weld joint corresponding to the displayed image of the cross-sectional area, and/or further comprising stopping the scrolling at a location along the length dimension of the image of the simulated weld joint and observing the displayed image of the cross-sectional area through the simulated weld joint at the location.

3. The method of any preceding claim, wherein the method further comprises:
receiving a user input to select a location along a length of the image of the simulated weld joint; and
displaying an image of a cross-sectional area through the simulated weld joint at the location selected by the user input.

4. The method of any preceding claim, wherein the simulated welding system is a simulated reality environment or an augmented reality environment using real-time weld puddle feedback.

5. The method of any preceding claim, further comprising simulating a weld puddle having real-time molten metal fluidity and heat dissipation characteristics, and displaying the simulated weld puddle on the at least one display device in real time.

6. The method of any preceding claim, wherein a displayed image of a cross-sectional area through the simulated weld joint at a location along the length dimension of the image of the simulated weld joint shows welding characteristics of the simulated weld joint at the location.

7. The method of any preceding claim, wherein the welding characteristics include penetration of the simulated weld bead into a simulated welding coupon and internal defects and discontinuities, as simulated by the system.

8. The method of any preceding claim, further comprising automatically looping in time across a length dimension of the image of the simulated weld joint between a first location and a second location, successively displaying in time during the looping an image of a cross-sectional area through the simulated weld joint at each of a plurality of defined locations spanning from the first location to the second location.

9. The method of any preceding claim, wherein the simulated weld joint includes a simulated welding coupon as modified by the simulated weld bead.

10. A simulated welding system (100, 2000, 2400) comprising:
a programmable processor-based subsystem (110);
a spatial tracker (120) operatively connected to the programmable processor-based subsystem (110);
at least one mock welding tool (160) capable of being spatially tracked by the spatial tracker (120); and
at least one display device operatively connected to the programmable processor-based subsystem (110);
wherein said system (100, 2000, 2400) is configured to:
simulate a simulated welding environment;
simulate a simulated weld bead based on tracked position and orientation of the mock welding tool in three-dimensional space;
display an image of a simulated weld joint having the simulated weld bead, on the display device; **characterized by**:
the system (100, 2000, 2400) being further configured to receive scrolling input via a user interface to scroll across a length dimension of the image of the simulated weld joint, and display images of cross-sectional areas through the simulated weld joint at successive locations along the length dimension of the image of the simulated weld joint on the display.

11. The system of claim 10 wherein the system is arranged to simulate a weld puddle having real-time molten metal fluidity and heat dissipation characteristics, and to display the simulated weld puddle on the at least one display device in real time.

12. The system of any of claims 10 or 11, wherein the system is further configured to display a cross-section indicator on the display device of the system indicating a location along the length dimension of the image of the simulated weld joint corresponding to the displayed image of the cross-sectional area.

13. The system of any claim of claims 10 to 12, wherein the system is configured to receive a user input from a user interface to select a location along a length of the image of the simulated weld joint; and display on the display device an image of a cross-sectional area through the simulated weld joint at the location selected by the user input.

14. The system of any of claims 10 to 13, wherein a displayed image of a cross-sectional area through the simulated weld joint at a location along the length dimension of the image of the simulated weld joint shows welding characteristics of the simulated weld joint at the location.

15. The system of any of any of claims 10 to 14, wherein the welding characteristics include at least one of penetration of the simulated weld bead into a simulated welding coupon and internal defects and discontinuities, as simulated by the system.

16. The system of any of claims 10 to 15, wherein the system is further configured to automatically loop in time across a length dimension of the image of the simulated weld joint between a first location and a second location, successively displaying in time during the looping an image of a cross-sectional area through the simulated weld joint at each of a plurality of defined locations spanning from the first location to the second location.

## Patentansprüche

1. Verfahren, umfassend:
Erzeugen einer simulierten Schweißverbindung mit einer simulierten Schweißraupe unter Verwendung eines simulierten Schweißsystems (100, 2000, 2400), wobei das Schweißsystem der simulierten Realität umfasst
ein programmierbares prozessorbasiertes Subsystem (110);
einen räumlichen Tracker (120), der operativ mit dem programmierbaren prozessorbasierten Subsystem (110) verbunden ist;
mindestens ein simuliertes Schweißwerkzeug (160), das konfiguriert ist, um mit dem programmierbaren prozessorbasierten Subsystem (110) und dem räumlichen Tracker (120) zu kommunizieren;
eine Anzeigevorrichtung, die konfiguriert ist, um mit dem programmierbaren prozessorbasierten Subsystem (110) und der räumlichen Verfolgungsvorrichtung (120) zu kommunizieren,
Simulieren der simulierten Schweißraupe basierend auf der verfolgten Position und Ausrichtung des Schein-Schweißwerkzeugs in dreidimensionalem Raum; und
Anzeigen eines Bildes der simulierten Schweißverbindung mit der simulierten Schweißraupe auf einer Anzeigevorrichtung des simulierten Schweißsystems (100, 2000, 2400);
**gekennzeichnet dadurch, dass**
das Verfahren ferner das Scrollen über eine Längenabmessung des Bildes der simulierten Schweißverbindung unter Verwendung einer Benutzerschnittstelle und das Anzeigen eines Bildes einer Querschnittsfläche durch die simulierte Schweißverbindung an aufeinanderfolgenden Stellen entlang der Längenabmessung des Bildes der simulierten Schweißverbindung auf der Anzeige einschließt.

2. Verfahren nach Anspruch 1, ferner umfassend das Anzeigen eines Querschnittsindikators auf der Anzeigevorrichtung des Systems, der eine Stelle entlang der Längenabmessung des Bildes der simulierten Schweißverbindung angibt, die dem angezeigten Bild der Querschnittsfläche entspricht, und/oder ferner umfassend ein Anhalten des Scrollens an einer Stelle entlang der Längenabmessung des Bildes der simulierten Schweißverbindung und ein Betrachten des angezeigten Bildes der Querschnittsfläche durch die simulierte Schweißverbindung an der Stelle.

3. Verfahren nach einem der vorhergehenden Ansprüche, wobei das Verfahren ferner umfasst:
Empfangen einer Benutzereingabe, um eine Stelle entlang einer Länge des Bildes der simulierten Schweißverbindung auszuwählen; und
Anzeigen eines Bildes einer Querschnittsfläche durch die simulierte Schweißverbindung an der durch die Benutzereingabe ausgewählten Stelle.

4. Verfahren nach einem der vorhergehenden Ansprüche, wobei das simulierte Schweißsystem eine simulierte Realitätsumgebung oder eine erweiterte Realitätsumgebung ist, die Schweißbad-Echtzeit-Rückmeldungen verwendet.

5. Verfahren nach einem der vorhergehenden Ansprüche, ferner umfassend ein Simulieren eines Schweißbads mit Echtzeit-Fließfähigkeit und Wärmeableitungseigenschaften von geschmolzenem Metall, und ein Anzeigen des simulierten Schweißbads auf der mindestens einen Anzeigevorrichtung in Echtzeit.

6. Verfahren nach einem der vorhergehenden Ansprüche, wobei ein angezeigtes Bild einer Querschnittsfläche durch die simulierte Schweißverbindung an einer Stelle entlang der Längenabmessung des Bildes der simulierten Schweißverbindung Schweißeigenschaften der simulierten Schweißverbindung an der Stelle zeigt.

7. Verfahren nach einem der vorhergehenden Ansprüche, wobei die Schweißeigenschaften ein Eindringen der simulierten Schweißraupe in ein simuliertes Schweißstück sowie innere Defekte und Unstetigkeiten, wie sie von dem System simuliert werden, umfassen.

8. Verfahren nach einem der vorhergehenden Ansprüche, ferner umfassend das automatische zeitliche Durchlaufen einer Schleife über eine Längenabmessung des Bildes der simulierten Schweißverbindung zwischen einer ersten Stelle und einer zweiten Stelle, wobei während des Durchlaufens der Schleife nacheinander ein Bild einer Querschnittsfläche durch die simulierte Schweißverbindung an jeder von einer Vielzahl von definierten Stellen, die sich von der ersten Stelle zur zweiten Stelle erstrecken, zeitlich angezeigt wird.

9. Verfahren nach einem der vorhergehenden Ansprüche, wobei die simulierte Schweißverbindung ein simuliertes Schweißstück einschließt, wie durch die simulierte Schweißraupe modifiziert.

10. Simuliertes Schweißsystem (100, 2000, 2400), umfassend:
ein programmierbares prozessorbasiertes Subsystem (110);
einen räumlichen Tracker (120), der operativ mit dem programmierbaren prozessorbasierten Subsystem (110) verbunden ist;
mindestens ein Schein-Schweißwerkzeug (160), das von dem räumlichen Tracker (120) räumlich verfolgt werden kann; und
mindestens eine Anzeigevorrichtung, die operativ mit dem programmierbaren prozessorbasierten Subsystem (110) verbunden ist;
wobei das System (100, 2000, 2400) konfiguriert ist zum:
Simulieren einer simulierten Schweißumgebung;
Simulieren einer simulierten Schweißraupe basierend auf der verfolgten Position und Ausrichtung des Schein-Schweißwerkzeugs in dreidimensionalem Raum;
Anzeigen eines Bildes einer simulierten Schweißverbindung mit der simulierten Schweißraupe auf der Anzeigevorrichtung; **gekennzeichnet dadurch, dass:**
das System (100, 2000, 2400) ferner konfiguriert ist, um Scrolleingaben über eine Benutzerschnittstelle zu empfangen, um über eine Längenabmessung des Bildes der simulierten Schweißverbindung zu scrollen, und Bilder von Querschnittsflächen durch die simulierte Schweißverbindung an aufeinanderfolgenden Stellen entlang der Längenabmessung des Bildes der simulierten Schweißverbindung auf der Anzeige anzuzeigen.

11. System nach Anspruch 10, wobei das System dazu ausgelegt ist, ein Schweißbad mit Echtzeit-Fließfähigkeits- und Wärmeableitungseigenschaften von geschmolzenem Metall zu simulieren und das simulierte Schweißbad auf mindestens einer Anzeigevorrichtung in Echtzeit anzuzeigen.

12. System nach einem der Ansprüche 10 oder 11, wobei das System ferner konfiguriert ist, um einen Querschnittsindikator auf der Anzeigevorrichtung des Systems anzuzeigen, der eine Stelle entlang der Längenabmessung des Bildes der simulierten Schweißverbindung angibt, die dem angezeigten Bild der Querschnittsfläche entspricht.

13. System nach einem der Ansprüche 10 bis 12, wobei das System konfiguriert ist, eine Benutzereingabe von einer Benutzerschnittstelle zu empfangen, um eine Stelle entlang einer Länge des Bildes der simulierten Schweißverbindung auszuwählen; und Anzeigen auf der Anzeigevorrichtung eines Bildes einer Querschnittsfläche durch die simulierte Schweißverbindung an der durch die Benutzereingabe ausgewählten Stelle.

14. System nach einem der Ansprüche 10 oder 13, wobei ein angezeigtes Bild einer Querschnittsfläche durch die simulierte Schweißverbindung an einer Stelle entlang der Längenabmessung des Bildes der simulierten Schweißverbindung Schweißeigenschaften der simulierten Schweißverbindung an der Stelle zeigt.

15. System nach einem der Ansprüche 10 bis 14, wobei die Schweißeigenschaften mindestens eines einschließen von Eindringen der simulierten Schweißraupe in ein simuliertes Schweißstück und innere Defekte und Unstetigkeiten, wie sie von dem System simuliert werden.

16. System nach einem der Ansprüche 10 bis 15, wobei das System ferner konfiguriert ist, um automatisch eine zeitliche Schleife über eine Längenabmessung des Bildes der simulierten Schweißverbindung zwischen einer ersten Stelle und einer zweiten Stelle zu durchlaufen, wobei während der Schleifenbildung nacheinander ein Bild einer Querschnittsfläche durch die simulierte Schweißverbindung an jeder einer Vielzahl von definierten Stellen, die sich von der ersten Stelle zur zweiten Stelle erstrecken, zeitlich angezeigt wird.

## Revendications

1. Procédé comprenant :
la génération d'un joint de soudure simulé avec un cordon de soudure simulé, à l'aide d'un système de soudage simulé (100, 2000, 2400), le système de soudage en réalité simulée comprenant
un sous-système à base de processeur programmable (110) ;
un dispositif de suivi spatial (120) connecté de manière opérationnelle au sous-système à base de processeur programmable (110) ;
au moins un outil de soudage fictif (160) configuré pour communiquer avec le sous-système à base de processeur programmable (110) et le dispositif de suivi spatial (120) ;
un dispositif d'affichage configuré pour communiquer avec le sous-système à base de processeur programmable (110) et le dispositif de suivi spatial (120),
la simulation du cordon de soudure simulé sur la base d'une position et d'une orientation suivies de l'outil de soudage fictif dans un espace tridimensionnel ; et
l'affichage d'une image du joint de soudure simulé avec le cordon de soudure simulé, sur un dispositif d'affichage du système de soudage simulé (100, 2000, 2400) ; **caractérisé par**
le procédé comportant en outre le défilement de l'image du joint de soudure simulé sur une dimension longitudinale à l'aide d'une interface utilisateur, et l'affichage d'une image d'une surface de section transversale à travers le joint de soudure simulé à des emplacements successifs sur la dimension longitudinale de l'image du joint de soudure simulé sur le dispositif d'affichage.

2. Procédé selon la revendication 1, comprenant en outre l'affichage d'un indicateur de section transversale sur le dispositif d'affichage du système indiquant un emplacement le long de la dimension longitudinale de l'image du joint de soudure simulé correspondant à l'image affichée de la surface de section transversale, et/ou comprenant en outre l'arrêt du défilement à un emplacement le long de la dimension longitudinale de l'image du joint de soudure simulé et l'observation de l'image affichée de la surface de section transversale à travers le joint de soudure simulé à l'emplacement.

3. Procédé selon l'une quelconque revendication précédente, dans lequel le procédé comprend en outre : la réception d'une entrée utilisateur pour sélectionner un emplacement le long d'une longueur de l'image du joint de soudure simulé ; et
l'affichage d'une image d'une surface de section transversale à travers le joint de soudure simulé à l'emplacement sélectionné par l'entrée utilisateur.

4. Procédé selon l'une quelconque revendication précédente, dans lequel le système de soudage simulé est un environnement de réalité simulée ou un environnement de réalité augmentée à l'aide d'un retour d'informations en temps réel de bain de fusion.

5. Procédé selon l'une quelconque revendication précédente, comprenant en outre la simulation d'un bain de fusion ayant des caractéristiques de fluidité du métal en fusion et de dissipation de la chaleur en temps réel, et l'affichage du bain de fusion simulé sur l'au moins un dispositif d'affichage en temps réel.

6. Procédé selon l'une quelconque revendication précédente, dans lequel une image affichée d'une surface de section transversale à travers le joint de soudure simulé à un emplacement le long de la dimension longitudinale de l'image du joint de soudure simulé montre des caractéristiques de soudage du joint de soudure simulé à l'emplacement en question.

7. Procédé selon l'une quelconque revendication précédente, dans lequel les caractéristiques de soudage comportent la pénétration du cordon de soudure simulé dans un coupon de soudure simulé et les défauts et discontinuités internes, tels que simulés par le système.

8. Procédé selon l'une quelconque revendication précédente, comprenant en outre le bouclage automatique dans le temps à travers une dimension longitudinale de l'image du joint de soudure simulé entre un premier emplacement et un second emplacement, en affichant successivement dans le temps pendant le bouclage une image d'une surface de section transversale à travers le joint de soudure simulé à chaque emplacement d'une pluralité d'emplacements définis s'étendant du premier emplacement au second emplacement.

9. Procédé selon l'une quelconque revendication précédente, dans lequel le joint de soudure simulé comporte un coupon de soudure simulé, tel que modifié par le cordon de soudure simulé.

10. Système de soudage simulé (100, 2000, 2400) comprenant :
un sous-système à base de processeur programmable (110) ;
un dispositif de suivi spatial (120) connecté de manière opérationnelle au sous-système à base de processeur programmable (110) ;
au moins un outil de soudage fictif (160) capable d'être suivi dans l'espace par le dispositif de suivi spatial (120) ; et
au moins un dispositif d'affichage connecté de manière opérationnelle au sous-système à base de processeur programmable (110) ;
dans lequel ledit système (100, 2000, 2400) est configuré pour :
simuler un environnement de soudage simulé ;
simuler un cordon de soudure simulé sur la base d'une position et d'une orientation suivies de l'outil de soudage fictif dans l'espace tridimensionnel ;
afficher une image d'un joint de soudure simulé avec le cordon de soudure simulé, sur le dispositif d'affichage ; **caractérisé par :**
le système (100, 2000, 2400) étant en outre configuré pour recevoir une entrée de défilement par l'intermédiaire d'une interface utilisateur pour faire défiler une dimension longitudinale de l'image du joint de soudure simulé, et pour afficher des images de surfaces de sections transversales à travers le joint de soudure simulé à des emplacements successifs le long de la dimension longitudinale de l'image du joint de soudure simulé sur le dispositif d'affichage.

11. Système selon la revendication 10, dans lequel le système est agencé pour simuler un bain de fusion ayant des caractéristiques de fluidité du métal en fusion et de dissipation de la chaleur en temps réel, et pour afficher le bain de fusion simulé sur l'au moins un dispositif d'affichage en temps réel.

12. Système selon l'une quelconque des revendications 10 ou 11, dans lequel le système est en outre configuré pour afficher un indicateur de section transversale sur le dispositif d'affichage du système indiquant un emplacement le long de la dimension longitudinale de l'image du joint de soudure simulé correspondant à l'image affichée de la surface de section transversale.

13. Système selon l'une quelconque des revendications 10 à 12, dans lequel le système est configuré pour recevoir une entrée utilisateur à partir d'une interface utilisateur pour sélectionner un emplacement le long d'une longueur de l'image du joint de soudure simulé ; et afficher sur le dispositif d'affichage une image d'une surface de section transversale à travers le joint de soudure simulé à l'emplacement sélectionné par l'entrée utilisateur.

14. Système selon l'une quelconque des revendications 10 à 13, dans lequel une image affichée d'une surface de section transversale à travers le joint de soudure simulé à un emplacement le long de la dimension longitudinale de l'image du joint de soudure simulé montre des caractéristiques de soudage du joint de soudure simulé à l'emplacement.

15. Système selon l'une quelconque des revendications 10 à 14, dans lequel les caractéristiques de soudage comportent au moins un parmi la pénétration du cordon de soudure simulé dans un coupon de soudure simulé et les défauts et discontinuités internes, tels que simulés par le système.

16. Système selon l'une quelconque des revendications 10 à 15, dans lequel le système est en outre configuré pour boucler automatiquement dans le temps à travers une dimension longitudinale de l'image du joint de soudure simulé entre un premier emplacement et un second emplacement, en affichant successivement dans le temps pendant le bouclage une image d'une surface de section transversale à travers le joint de soudure simulé à chaque emplacement d'une pluralité d'emplacements définis s'étendant du premier emplacement au second emplacement.
